# EUROPÄISCHE PATENTSCHRIFT

(11) **EP 2 221 158 B1**
(45) Veröffentlichungstag und Bekanntmachung des Hinweises auf die Patenterteilung: **20.06.2012**
(21) Anmeldenummer: 10005120.0
(22) Anmeldetag: 08.02.2008
(51) Int. Cl.: B02C 18/08, B02C 18/12, B02C 23/26, B29B 17/00, B01F 7/16, B01F 13/10, B01F 15/02, B29B 7/16, B29B 13/10, B29B 17/04

(54) **Verfahren und Vorrichtung zur Aufbereitung eines Materials**
Process and apparatus for treatment of a material
Procédé et dispositif pour la préparation d'un matériau

(30) Priorität: 15.02.2007 AT 2442007
(43) Veröffentlichungstag der Anmeldung: 25.08.2010
(62) Teilanmeldung aus: 08706015.8
(73) Patentinhaber: EREMA Engineering Recycling Maschinen und Anlagen Gesellschaft m.b.H., 4052 Ansfelden (AT)
(72) Erfinder: Weigerstorfer, Georg, 4030 Linz/Ebelsberg (AT); Feichtinger, Klaus, 4040 Linz (AT); Pauli, Peter, 4511 Allhaming (AT)
(74) Vertreter: Wildhack, Andreas

(56) Entgegenhaltungen:
- WO-A-2005/087474
- DE-A1- 2 432 494
- DE-A1- 2 609 850
- DE-A1- 3 705 343
- DE-A1- 4 205 073

## Beschreibung

Die Erfindung bezieht sich auf ein Verfahren gemäß Anspruch 1 sowie eine Vorrichtung gemäß Anspruch 5.

Zahlreiche Kunststoff-Recycling-Anwendungen leiden unter problematischen Beschickungseinflüssen wie hoher Restfeuchte, großen Dichteschwankungen, zu großen Aufgabeportionen etc. Dadurch werden die Performance des nachgeschalteten Extruders bzw. die Wirtschaftlichkeit des Verfahrens negativ beeinflusst. Der Extruder leidet unter diesen Beschickungseinflüssen, was zu reduzierter und schwankender Ausstoßleistung, ungleichmäßiger Aufschmelzleistung, reduzierter Produktqualität, gegebenenfalls erhöhtem Verschleiß und insgesamt zu einer reduzierten Produktivität führt.

Aus dem Stand der Technik, z. B. aus der WO 00/74912 A1, sind Vorrichtungen mit zwei übereinander angeordneten Mischwerkzeugen im Schneidverdichter bekannt, die diese Probleme verringern.

Die Zone, wo vorwiegend die Zerkleinerung bzw. Trocknung bzw. Vorwärmung des Materiales erfolgt, ist getrennt von der Zone, in der das Material in das Schneckengehäuse eingedrückt wird. Hiebei stellt sich nach einer kurzen Betriebszeit ein Gleichgewicht zwischen dem von der Schnecke unter der Trägerscheibe abgezogenen Materialvolumen und dem durch den Ringspalt von oben nach unten in den Raum unter der Trägerscheibe eintretenden Materialstrom ein. Dies hat zur Folge, dass der im wesentlichen mit von der Schnecke abzutransportierendem Material gefüllte Raum unterhalb der Trägerscheibe dem Abzug des Materiales, welches in Form einer Mischtrombe im Aufnahmebehälter umläuft, einen gewissen Widerstand entgegensetzt, sodass - wenn überhaupt - nur ein verschwindend geringer Anteil des frisch in den Aufnahmebehälter eingebrachten Materiales gleich nach unten in den Bereich unter der umlaufenden Trägerscheibe gelangen kann.

Dies trägt dazu bei, eine ausreichende Verweilzeit des Materiales im Aufnahmebehälter, insbesondere in dessen Bereich oberhalb der Trägerscheibe, sicherzustellen. Damit wird die Temperatur des in die Austragöffnung des Aufnahmebehälters eingebrachten Materiales vergleichmäßigt, da im wesentlichen alle im Behälter befindlichen Kunststoffteile ausreichend vorbearbeitet werden. Die annähernd konstante Temperatur des ins Schneckengehäuse eintretenden Materiales hat zur Folge, dass inhomogene Kunststoffnester bzw. -bereiche im Gehäuse der Extruderschnecke weitgehend eliminiert werden und dadurch die Schneckenlänge geringer gehalten werden kann als bei den bekannten Konstruktionen, da die Schnecke weniger Arbeit aufbringen muss, um das Kunststoffmaterial mit Sicherheit auf gleiche Plastifiziertemperatur zu bringen. Die konstante Eintrittstemperatur des Kunststoffmateriales in das Schneckengehäuse hat weiters eine gleichmäßige Vorverdichtung des Materiales im Schneckengehäuse zur Folge, was sich auf die Verhältnisse an der Extruderöffnung günstig auswirkt, insbesondere in Form eines gleichmäßigen Extruderdurchsatzes und einer gleichmäßigen Materialqualität am Extruderausgang. Die verkürzte Schneckenlänge ergibt eine Energieeinsparung und eine im Vergleich zu anderen Konstruktionen erniedrigte Verarbeitungstemperatur im Extruder, da ja die durchschnittliche Temperatur, mit welcher das Material in das Schneckengehäuse eintritt, gleichmäßiger ist als bei diesen anderen Konstruktionen. Bei derartigen Vorrichtungen muss somit das bearbeitete Kunststoffmaterial - gesehen über den gesamten Bearbeitungsvorgang - auf eine im Vergleich zu den bekannten Konstruktionen weniger hohe Temperatur gebracht werden, um die Sicherheit einer ausreichenden Plastifizierung zu haben. Dieser Abbau der Spitzentemperaturen hat die eingangs erwähnte Energieeinsparung zur Folge und weiters die Vermeidung einer thermischen Schädigung des zu verarbeitenden Materiales.

Durch die Anordnung von zwei übereinander angeordneten Mischwerkzeugen im Schneidverdichter und der Ausbildung von zwei aufeinanderfolgenden Behandlungsstufen erfolgt somit auf einfache Weise eine Trennung des Arbeitsschrittes der "Materialvorbereitung", d.h. des Zerkleinerns, Trocknens, Vorwärmens, Verdichtens und Mischens vom Arbeitschritt der "Beschickung des Extruders". Durch die Entkoppelung der beiden Arbeitsschritte werden negative Beschickungseinflüsse, wie oben beschrieben, vom Extruder und dessen sensibler Beschickungs- bzw. Einzugszone weitgehend ferngehalten. Das Resultat ist ein sehr gleichmäßig beschickter und sehr gleichmäßig laufender Extruder, welcher unabhängig von Beschickungseinflüssen konstant bis zu 15% Mehrleistung erbringen kann. Weiters sind größere Aufgabeportionen verarbeitbar, eine höhere Restfeuchte im Aufgabegut ist zulässig, eine höhere Durchsatzleistung ist erzielbar, das Material hat eine niedrigere Schmelzetemperatur und es kommt zu Energiekosteneinsparungen bei höherer Granulatqualität.

Derartige Vorrichtungen haben sich für die Aufbereitung, insbesondere thermoplastischen, Kunststoffmateriales sehr bewährt, jedoch hat es sich herausgestellt, dass es mitunter zur Einsperrung flüchtiger, aus dem bearbeiteten Material abgegebener Stoffe im Raum unter der oberen Trägerscheibe kommt. Nicht immer können diese flüchtigen Substanzen durch den zwischen dem Rand der Trägerscheibe und der Innenwand des Aufnahmebehälters bestehenden Ringspalt nach oben entweichen, zumal ja durch diesen Ringspalt das zu bearbeitende Material von oben nach unten durchtritt. Besonders unangenehm ist es, wenn die flüchtigen Stoffe mit dem bearbeiteten Material aus dem Aufnahmebehälter abtransportiert werden und in den direkt oder indirekt an den Aufnahmebehälter angeschlossenen Extruder gelangen, da dann die Gefahr besteht, dass im extrudierten Material Gaseinschlüsse unterschiedlicher Art vorhanden sind, was die Qualität des am Extruderausgang erhaltenen Materials wesentlich herabsetzt. Diese Gefahr kann auch durch eine zumeist im Extruder vorgesehene Entgasungseinrichtung nicht völlig beseitigt werden. Zudem sind solche flüchtige Substanzen bzw. Störstoffe zumeist nicht von vornherein zu vermeiden, denn es handelt sich um Wasserdampf, Abspaltprodukte des zu bearbeitenden Materials, gasförmige oder verdampfte Kühlmittelanteile usw.. Insbesondere bei in den Aufnahmebehälter eingebrachtem feuchtem Kunststoffmaterial können diese flüchtigen Substanzanteile erheblich sein.

Um diese Nachteile zu vermeiden und das durch die Austragsöffnung des Aufnahmebehälters abgeführte Material mit geringem Aufwand zumindest im wesentlichen frei von den erwähnten flüchtigen Substanzen zu machen, kann vorgesehen werden, dass die Trägerscheibe zumindest einen, insbesondere nahe der Achse und nahe den beim Umlauf der Trägerscheibe nachlaufenden Rändern der Werkzeuge angeordneten, Durchbruch aufweist, welcher den Raum ober ihr mit dem Raum unter ihr verbindet. Durch diesen Durchbruch können die im Raum unter der Trägerscheibe befindlichen oder dort erst entstehenden flüchtigen Stoffe nach oben durch die Trägerscheibe hindurch in den Raum ober ihr entweichen, wo sie unschädlich sind und von wo sie gegebenenfalls entweichen können. Hierbei hat es sich durch Versuche ergeben, dass nahe der Achse angeordnete Durchbrüche besser wirksam sind als achsfern angeordnete Durchbrüche. Die nahe den beim Umlauf der Trägerscheibe nachlaufenden Ränder der Werkzeuge angeordneten Durchbrüche nützen die von den umlaufenden Werkzeugen hervorgerufene Saugwirkung dazu aus, die erwähnten flüchtigen Substanzen aus dem Raum unter der Trägerscheibe abzusaugen.

Trotzdem sind derartige Vorrichtungen zumeist nicht imstande, sämtliche Störsubstanzen restlos zu entfernen, was eine Beeinträchtigung der Aufbereitung bzw. Verarbeitung zur Folge hat.

Als Störsubstanzen sind grundsätzlich alle Stoffe anzusehen, die aus dem zu behandelnden Material austreten bzw. sich von dem eingebrachten Material lösen bzw. eventuell sogar gemeinsam mit dem Material eingebracht werden und die eine spätere Beeinträchtigung der Verarbeitung nach sich ziehen können. Die Störstoffe können außen an den Oberflächen des aufzubereitenden Materials anhaften, wie dies insbesondere bei Waschwasser, Oberflächenbeschichtungen etc. der Fall ist und dann dort verdunsten, sublimieren, sich von der Oberfläche lösen od. dgl.. Die Störstoffe können aber auch in der Matrix des Materials bzw. im Inneren des Materials vorliegen und dann im Zuge der Bearbeitung nach außen diffundieren und dort verdunsten, sublimieren od. dgl.. Dies ist insbesondere bei organischen Zusatzstoffen, beispielsweise bei Weichmachern, zu beachten, aber auch Wasser, Monomere, Gase oder Wachse können in der Matrix vorliegen. Es kann sich bei den zu entfernenden Störstoffen somit auch um sublimierende Feststoffe oder um Staub handeln.

Probleme gibt es insbesondere bei Kunststoffmaterialien mit hoher externer Feuchtigkeit, wie beispielsweise Polyolefinwaschschnitzel etc.. Auch Materialien mit hoher interner Feuchtigkeit, beispielsweise PA-Fasern, sind problematisch. Zwischen den Scheiben bzw. Mischwerkzeugen kann es dann beispielsweise durch die mit Feuchtigkeit gesättigte Luft, zu Kondensation und Verdampfung kommen, was wiederum, neben den weiteren erwähnten Nachteilen zu einem erhöhten Energiebedarf des Systems führt.

Aus dem Stand der Technik sind Vorrichtungen bekannt, mit denen über Absaugvorrichtungen z.B. Wasserdampf, der sich über dem zu bearbeitenden Material gebildet hat, abgesaugt werden kann. Allerdings ist ein Aufnahmebehälter, wie er bei oben erwähnten Vorrichtungen eingesetzt wird, in seinem unteren Bereich im wesentlichen gasdicht bzw. ist ein druckausgleichendes Nachströmen von Luft von unten nur schwer möglich, sodass die feuchtigkeitsgesättigte Luft nicht gut abgesaugt werden kann. Bei Vorrichtungen mit mehreren übereinander angeordneten Scheiben bzw. Mischwerkzeugen ist dies mit zusätzlichen Schwierigkeiten verbunden.

Bei der Aufbereitung von Material mit hoher Restfeuchte entsteht durch die große Menge des entstandenen Wasserdampfes von selbst eine gewisse Bewegungsdynamik im Schneidverdichter, die eine Absaugung der feuchten Luft unterstützt. Bei der Aufbereitung von Material mit geringer Restfeuchte ist dies jedoch nicht der Fall, vielmehr sammelt sich die feuchtigkeitsgesättigte Luft in einer zentralen Senke der Mischthrombe knapp über dem Materiallevel. Eine unterstützende Dynamik wird nicht gebildet und die Absaugung bzw. Entfernung dieser feuchten Luft ist wesentlich schwieriger.

Aus dem Stand der Technik gemäß DE-A-2609850 ist ein Verfahren gemäß dem Oberbegriff des Anspruchs 1 bzw. eine Vorrichtung gemäß dem Oberbegriff des Anspruchs 5 bekannt.

Aufgabe der vorliegenden Erfindung ist es daher, ein Verfahren bzw. eine Vorrichtung zu schaffen, durch das/die es ermöglicht wird, unerwünschte Störstoffe, die die Aufbereitung bzw. weitere Bearbeitung des Materials beeinträchtigen, beispielsweise flüchtige Substanzen, insbesondere Feuchtigkeit bzw. Wasserdampf, aus dem aufzubereitenden Material zu entfernen und das Aufbereitungsverfahren in vorteilhafter Weise zu führen und zu beeinflussen.

Diese Aufgabe wird bei einem Verfahren der eingangs erwähnten Art durch die kennzeichnenden Merkmale des Anspruchs 1 und einer Vorrichtung der eingangs erwähnten Art durch die kennzeichnenden Merkmale des Anspruch 5 gelöst.

Dabei ist beim Verfahren erfindungsgemäß vorgesehen, dass das Gas über Gaszufuhrmittel in den Aufnahmebehälter eingebracht wird, die in oder auf zumindest einem Mischwerkzeug und/oder einer das Mischwerkzeug tragenden Trägerscheibe ausgebildet oder angeordnet sind.

Bei der Vorrichtung ist erfindungsgemäß vorgesehen, dass die Gaszufuhrmittel auf zumindest einem Mischwerkzeug und/oder zumindest einer Trägerscheibe ausgebildet oder angeordnet sind.

Durch die erfindungsgemäße Anordnung der Gaszufuhrmittel kann sich eine vorteilhafte Strömung durch zumindest einen Teilbereich des Materials ausbilden, wodurch die im Material vorhandene Feuchtigkeit bzw. die Störstoffe effektiv entfernt werden.

Weitere vorteilhafte Ausgestaltungen der Erfindung werden in den abhängigen Ansprüchen beschrieben:

Die Gaszufuhrmittel können als passive Gaszufuhrmittel, beispielsweise als bloße Durchgangsöffnungen, ausgebildet sein, durch die das Gas lediglich passiv, beispielsweise durch Unterdruck im Schneidverdichter ins Innere des Schneidverdichters eingesaugt wird. Die Gaszufuhrmittel können aber auch als aktive Gaszufuhrmittel, beispielsweise als Düsen od. dgl. ausgebildet sein, durch die das Gas beispielsweise mit Pumpen, Gebläsen etc. mit Überdruck aktiv ins Innere des Schneidverdichters eingeblasen, eingedüst oder eingepumpt werden kann.

Ebenso können die Gasabfuhrmittel als passive Gasabfuhrmittel ausgebildet sein, durch die das Gas lediglich durch Überdruck im Aufnahmebehälter forciert, durchtritt oder als beispielsweise über Saugpumpen beaufschlagte, aktive Gasabfuhrmittel.

Vorteilhafterweise wird das Gas, bevor es dem Aufnahmebehälter zugeführt wird, über eine vorgeschaltete Heizeinrichtung oder eine Gastrocknungseinrichtung erwärmt bzw. vorgetrocknet. Auf diese Weise kann die Entfernung der Störstoffe bzw. auch die Verfahrensführung effektiv gesteuert werden.

Zur Regulierung der Gaszufuhr bzw. -abfuhr sind die Gaszufuhr- und/oder abfuhrmittel zumindest teilweise verschließbar bzw. ansteuerbar.

Die Gaszufuhrmittel können als einzelne singuläre Öffnungen ausgebildet sein, die einen Durchmesser zwischen 10 und 300 mm, vorzugsweise zwischen 50 und 90 mm aufweisen.

Auf der dem Inneren des Aufnahmebehälters zugewendeten Seite der Gaszuführmittel, insbesondere stromaufwärts der Drehrichtung des Materials, kann eine Abdeckung bzw. ein Schild vorgesehen sein, um zu verhindern, dass das Material die Gaszufuhrmittel verstopft.

Um die Rotationsbewegung im Inneren des Aufnahmebehälters möglichst nicht zu stören und lokale Überhitzungen zu vermeiden, ist es außerdem vorteilhaft, dass die Gaszuführmittel bündig mit der Innenwand des Behälters abschließen und nicht davon abragen bzw. vorstehen.

Die charakteristische Ausbildung der Gaszufuhrmittel sowie deren Position hat Einfluss auf die Durchströmung des Materials mit dem Gas und somit auf die Entfernung der Störsubstanzen.

Die Gaszufuhrmittel können Zusätzlich in der Bodenfläche des Schneidverdichters unterhalb des untersten Bodenmischwerkzeuges ausgebildet sein und dort vorzugsweise innerhalb des innersten Radiusdrittels der Bodenfläche. Wenn die Gaszufuhrmittel in der Bodenfläche ausgebildet sind, kommt es durch die Einblasung des Gases von unten auch zu einer Auflockerung des Sumpfes, wodurch eine noch bessere Aufbereitung des Materials gewährleistet wird.

Die Gaszufuhrmittel können dabei als einzelne singuläre Öffnungen oder in Form einer um die Durchführung der Antriebswelle des Mischwerkzeuges durch die Bodenfläche herum nahezu durchgehend verlaufenden ringschlitzartigen Öffnung ausgebildet sein.

Alternativ oder zusätzlich zu den Öffnungen in der Bodenfläche können die Gaszufuhrmittel auch in der Seitenwand des Schneidverdichters angeordnet sein, wobei darauf zu achten ist, dass die Gaszufuhrmittel ständig unterhalb des Materialniveaus liegen. Vorteilhaft sind Positionen der Gaszufuhrmittel im Bereich des untersten Drittels der Gesamthöhe des Schneidverdichters, insbesondere unterhalb der unteren bzw. untersten bodennahen Mischwerkzeuge.

Bei Vorrichtungen mit mehreren übereinander angeordneten Mischwerkzeugen ist es äußerst vorteilhaft für die Verfahrensführung, wenn die Gaszufuhrmittel zwischen den obersten und den untersten Mischwerkzeugen angeordnet sind bzw. in den dazwischen ausgebildeten Raum einmünden. Auf diese Weise wird das Material gut vom Gas bzw. der Luft durchströmt und die Strömung wirkt mit der Durchmischung durch die Mischwerkzeuge in vorteilhafterweise zusammen.

Vorteilhafterweise münden die Gaszufuhrmittel nicht im Bereich der Kanten der Trägerscheiben bzw. der Mischwerkzeuge, sondern, insbesondere jeweils, in den Bereich zwischen jeweils zwei Trägerscheiben bzw. Mischwerkzeugen in den Aufnahmebehälter ein bzw. sind dort angeordnet, wobei die Gaszufuhrmittel insbesondere mittig zwischen jeweils zwei Trägerscheiben bzw. Mischwerkzeugen angeordnet sind.

In diesem Zusammenhang ist es besonders vorteilhaft, wenn in der oberen Trägerscheibe Durchbrüche ausgebildet sind, da auf diese Weise die Störsubstanzen effektiv aus dem Bereich zwischen den Mischwerkzeugen entfernt werden können.

Wenn die Gaszufuhrmittel in demjenigen Bereich der Seitenwand des Behälters ausgebildet sind, in dem die rotierenden Materialteilchen den höchsten Druck auf die Seitenwand ausüben, so müssen die Gaszufuhrmittel diesem Druck entgegenwirken und als aktive Gaszufuhrmittel das Gas mit Druck ins Innere des Behälters einblasen.

Auch in der Seitenwand können die Gaszufuhrmittel als einzelne singuläre Öffnungen ausgebildet sein. Sie können aber auch in Form eines sich entlang des Umfanges erstreckenden Ringspaltes ausgebildet sein.

Gemäß eine bevorzugten Ausführungsform ist es vorteilhaft, an der Unterseite der Trägerscheibe Förderflügel auszubilden, die eine Material- und Gasströmung vom Bereich unterhalb der Trägerscheibe nach oben bewirken. Bei dieser Ausführungsform wirken die Förderflügel somit in vorteilhafter Weise mit den Gaszufuhrmitteln und gegebenenfalls ausgebildeten Durchbrüchen zusammen und gewährleisten auf diese Weise einen effektiven Materialaustrag aus dem Bereich unterhalb der Trägerscheibe und eine vorteilhafte Verfahrensführung.

Um ein Mitreißen von Materialteilchen bzw. Flakes durch eine zu starke Absaugung des Gases zu verhindern ist es vorteilhaft, die Gasabfuhrmittel möglichst weit entfernt vom Materiallevel, insbesondere im Deckel des Aufnahmebehälters anzuordnen.

Weitere Kennzeichen und Vorteile der Erfindung ergeben sich aus der Beschreibung von Ausführungsbeispielen des Erfindungsgegenstandes, welche in der Zeichnung schematisch dargestellt sind.

Die Zeichnungen zeigen unterschiedliche Ausführungsformen mit zusätzlichen Gaszufuhrmitteln, beispielsweise über die Seitenwand und/oder der Boden. Bei all diesen Ausführungsformen sind, wie dies erfindungsgemäß vorgesehen ist, die Gaszufuhrmittel auch an den Mischwerkzeugen und/oder den Trägerscheiben angeordnet. Dies ist allerdings in den Zeichnungen nicht explizit dargestellt.
- Fig. 1: zeigt einen Vertikalschnitt durch eine Vorrichtung gemäß einem ersten Ausführungsbeispiel.
- Fig. 2: zeigt eine Draufsicht zu Fig. 1, teilweise im Schnitt.
- Fig. 3: zeigt axonometrisch die Ausbildung von Abdeckungen für die Durchbrüche.
- Fig. 4: zeigt ein weiteres Ausführungsbeispiel im Vertikalschnitt.
- Fig. 5: ist eine Draufsicht zu Fig. 4, teilweise im Schnitt.
- Fig. 6: zeigt ein Detail im Vertikalschnitt durch die Trägerscheibe.
- Fig. 7: zeigt einen Vertikalschnitt durch ein weiteres Ausführungsbeispiel.
- Fig. 8: zeigt eine Draufsicht davon.
- Fig. 9: zeigt ein weiteres Ausführungsbeispiel im Vertikalschnitt.
- Fig. 10: zeigt in weiteres Ausführungsbeispiel im Vertikalschnitt
- Fig. 11: zeigt eine Draufsicht davon.
- Fig. 12: zeigt in weiteres Ausführungsbeispiel im Vertikalschnitt

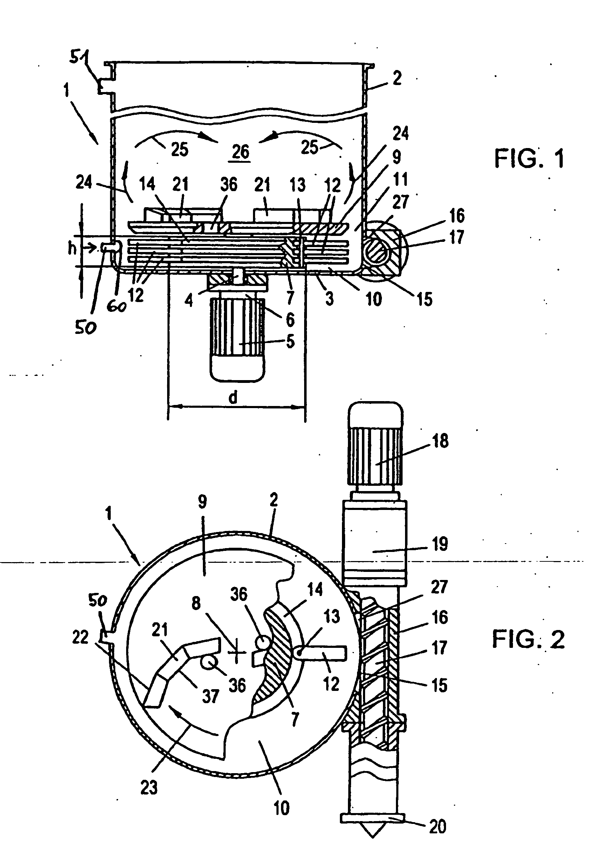

Bei der Ausführungsform nach Fig. 1 und 2 hat die Vorrichtung einen Aufnahmebehälter bzw. Schneidverdichter 1 für das zu verarbeitende, insbesondere thermoplastische, Kunststoffmaterial, das in diesen Behälter 1 von oben mittels einer nicht dargestellten Fördereinrichtung, z.B. eines Förderbandes, eingebracht wird. Das zugeführte Kunststoffmaterial kann vorzerkleinert und/oder vorgetrocknet sein.

Der Aufnahmebehälter 1 ist zylindrisch topfförmig mit vertikalen Seitenwänden 2 und hat einen horizontalen ebenen Boden 3 mit Kreisquerschnitt. Der Aufnahmebehälter 1 kann oben abgeschlossen oder offen sein. Eine Welle 4 durchsetzt, abgedichtet gelagert, den Boden 3 und hat eine vertikale Achse 8, die mit der Behälterachse zusammenfällt. Die Welle 4 ist durch einen unterhalb des Bodens 3 angeordneten Motor 5 mit Getriebe 6 zur Drehbewegung angetrieben. Im Behälter 1 sind mit der Welle 4 ein Rotor 7 und eine darüber angeordnete Trägerscheibe 9 drehschlüssig verbunden. Der Rotor 7 -ist von einem kreiszylindrischen Block gebildet, dessen axiale Erstreckung h wesentlich größer ist als jene der flachen Trägerscheibe 9, dessen radiale Erstreckung d jedoch wesentlich kleiner ist als jene der Trägerscheibe 9. Auf diese Weise wird unterhalb der Trägerscheibe 9 ein freier Raum 10 gebildet, der mit dem oberhalb der Trägerscheibe 9 befindlichen Raum 26 des Behälters 1 über einen Ringspalt 11 in freier Strömungsverbindung für das bearbeitete Material steht, der zwischen dem Umfang der Trägerscheibe 9 und der Seitenwand 2 des Behälters 1 besteht. Durch diesen freien Ringspalt 11 kann das behandelte Kunststoffgut aus dem oberen Raum 26 ungehindert in den darunterliegenden ringförmigen Raum 10 gelangen.

Die obere Trägerscheibe 9 trägt an ihrer Oberseite fest angeordnete obere Mischwerkzeuge 21, welche das im Raum 26 des Behälters 1 befindliche Material mischen und/oder zerkleinern und/oder erwärmen. Für eine wirksame Zerkleinerung können die Werkzeuge 21 mit Schneidkanten 22 ausgebildet sein, die entgegen der Umlaufrichtung der Trägerscheibe 9 (Pfeile 23) gekrümmt oder abgewinkelt (Fig. 2) ausgebildet sein können, um einen ziehenden Schnitt zu erreichen.

Im Betrieb ergibt sich beim Umlauf der Trägerscheibe 9 durch den Einfluss der Werkzeuge 21 ein Umlauf der in den Behälter 1 eingebrachten Kunststoffmasse, wobei das bearbeitete Material entlang der Seitenwand 2 des Behälters 1 im Raum 26 hochsteigt (Pfeile 24) und im Bereich der Behälterachse wieder nach unten zurückfällt (Pfeile 25). Die so entstehende Mischtrombe durchwirbelt das eingebrachte Material, sodass ein guter Mischeffekt erzielt wird.

Das in den Behälter 1 eingebrachte, und dort erforderlichenfalls zerkleinerte Material gelangt durch den Ringspalt 11 allmählich in den unterhalb der Trägerscheibe 9 liegenden Raum 10 und wird dort durch untere, der Bodenfläche 3 nahe Mischwerkzeuge 12 bearbeitet, die am Rotor 7 mittels vertikaler Bolzen 13 in Ringnuten 14 des Rotors 7 schwenkbar befestigt sind, sodass diese Werkzeuge 12 um die Achsen der Bolzen 13 frei pendeln können. Die freien Enden der unteren Werkzeuge 12 liegen im Abstand von der Seitenwand 2 des Behälters 1. Diese unteren Werkzeuge 12 bewirken durch ihre Schlagwirkung eine zusätzliche Mischung und/oder Zerkleinerung und/oder Erwärmung des im Raum 10 befindlichen Materials.

Durch die von diesen unteren bodennahen Werkzeugen 12 auf das Material ausgeübte Fliehkraft wird das Material in eine Austragsöffnung 15 des Behälters 1 befördert, welche in etwa auf der Höhe der zusätzlichen unteren Werkzeuge 12 liegt und den Raum 10 des Behälters 1 mit einer Einzugsöffnung 27 eines Schneckengehäuses 16 verbindet, in welchem eine Schnecke 17 drehbar gelagert ist, die an ihrem einen Stirnende durch einen Motor 18 mit Getriebe 19 zur Drehbewegung angetrieben ist und das ihr zugeführte Kunststoffmaterial am anderen Stirnende, z.B. durch einen Extruderkopf 20. ausdrückt. Es kann sich um eine Einfachschecke, um eine Doppelschnecke oder um eine Mehrfachschnecke handeln. Wie ersichtlich, ist das Schneckengehäuse 16 annähernd tangential an den Behälter angeschlossen, so dass Umlenkungen des durch die Schnecke 16 plastifizierten Kunststoffmaterials im Bereich seines Austrittes aus dem Gehäuse 16 vermieden werden. Stattdessen kann die Schnecke 17 auch eine reine Förderschnecke sein, welche das im Behälter 1 aufbereitete Material der weiteren Verwendung zuführt, z.B. einem Extruder.

Im Betrieb stellt sich nach einer kurzen Einlaufzeit ein Gleichgewichtszustand zwischen dem von der Schnecke abtransportierten Material und dem durch den Ringspalt 11 von oben in den Raum 10 eintretenden Material ein. Dies hat zur Folge, dass es sehr unwahrscheinlich ist, dass ein in den Behälter 1 eingebrachtes Kunststoffteilchen in das Schneckengehäuse 16 gelangt, ohne zuvor eine ausreichende Verweilzeit im Behälter 1 verbracht zu haben. Dadurch wird eine genügende Bearbeitung aller Kunststoffteilchen durch die Mischwerkzeuge 12, 21 sichergestellt, sodass das von der Schnecke 17 abgeführte Material eine zumindest annähernd gleichmäßige Beschaffenheit aufweist, insbesondere hinsichtlich der Temperatur und der Größe der Kunststoffteilchen. Dies bedeutet, dass die von der Schnecke 17 oder der angeschlossenen Extruderschnecke aufzubringende Plastifizierarbeit vergleichsweise gering ist, sodass hohe thermische Spitzenbeanspruchungen auf das Kunststoffmaterial bei der Plastifizierarbeit entfallen. Dadurch wird das Kunststoffmaterial geschont und an Antriebsenergie für die Schnecke 17 bzw. die Extruderschnecke wesentlich gespart.

Wie erwähnt, ist das in den Behälter 1 eingebrachte Material in der Regel nicht völlig trocken und/oder es weist Verunreinigungen auf, die bei der Verarbeitung im Behälter flüchtige Substanzen abgeben, z.B. Wasserdampf, Abspaltprodukte aus dem bearbeitenden Material, verdampftes Kühlmittel, flüchtige Substanzen aus Einfärbungs- und/oder Bedruckungsmaterial usw.. Um diese Störsubstanzen effektiv zu entfernen bzw. um zu vermeiden, dass diese flüchtigen Substanzen sich im Raum 10 unter der oberen Trägerscheibe 9 ansammeln und dadurch den Durchtritt von bearbeitetem Material aus dem Raum 26 in den Raum 10 behindern und/oder in das Innere des Schneckengehäuses 16 gelangen, hat die Trägerscheibe 9 gemäß Fig. 1 und 2 mindestens einen, vorzugsweise jedoch mehrere Durchbrüche 36, welche den Raum 26 oberhalb der Trägerscheibe 9 mit dem unter ihr befindlichen Raum 10 verbinden. Durch diese Durchbrüche 36 können die im Raum 10 eingesperrten flüchtigen Substanzen durch die Trägerscheibe 9 hindurch nach oben entweichen und so aus dem Behälter 1, beispielsweise durch eine Absaugung 51, abgeführt werden.

Diese Durchbrüche können von in einem Querschnitt kreisförmigen oder geschlitzten Bohrungen gebildet sein. Zumindest einige dieser Durchbrüche 36 sind nahe der Achse 8 des Behälters 1 angeordnet, und zwar unmittelbar hinter den Werkzeugen 21, so dass die Durchbrüche 36, gesehen in Umlaufrichtung (Pfeil 23) der Trägerscheibe 9, den nachlaufenden Rändern 37 bzw. Kanten der Werkzeuge 21 benachbart liegen. Die von den Werkzeugen 21 bei ihrem Umlauf an ihrer nachlaufenden Kante hervorgerufene Saugwirkung unterstützt die Absaugung der flüchtigen Substanzen durch die Durchbrüche 36 nach oben.

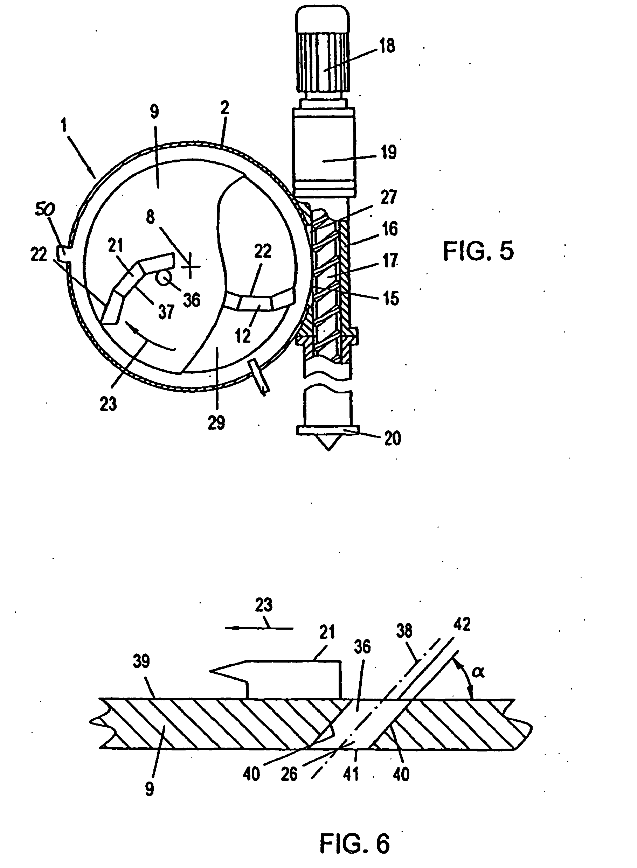

Die Achsen der Durchbrüche 36 können vertikal liegen, es ist jedoch zweckmäßiger, diese Achsen 38 gemäß Fig. 6 schräg anzuordnen, und zwar so, dass sie geneigt sind sowohl zur Ebene der Deckfläche 39 der Trägerscheibe 9 als auch zur Behälterachse 8. Die Neigung der Wände 40 der Durchbrüche (Winkel α, Fig. 6) liegt zweckmäßig zwischen 30 und 60°, vorzugsweise bei etwa 45°. Diese Neigung ist so gewählt, dass das Eintrittsende 41 jedes Durchbruches 36, gesehen in Umlaufrichtung der Trägerscheibe 9 (Pfeil 23) weiter vorne liegt als das Austrittsende 42. Auch diese Maßnahme unterstützt die bereits erwähnte Saugwirkung und wirkt einem direkten Durchfallen des Gutes aus dem Raum 26 durch die Durchbrüche 36 in den Raum 10 entgegen.

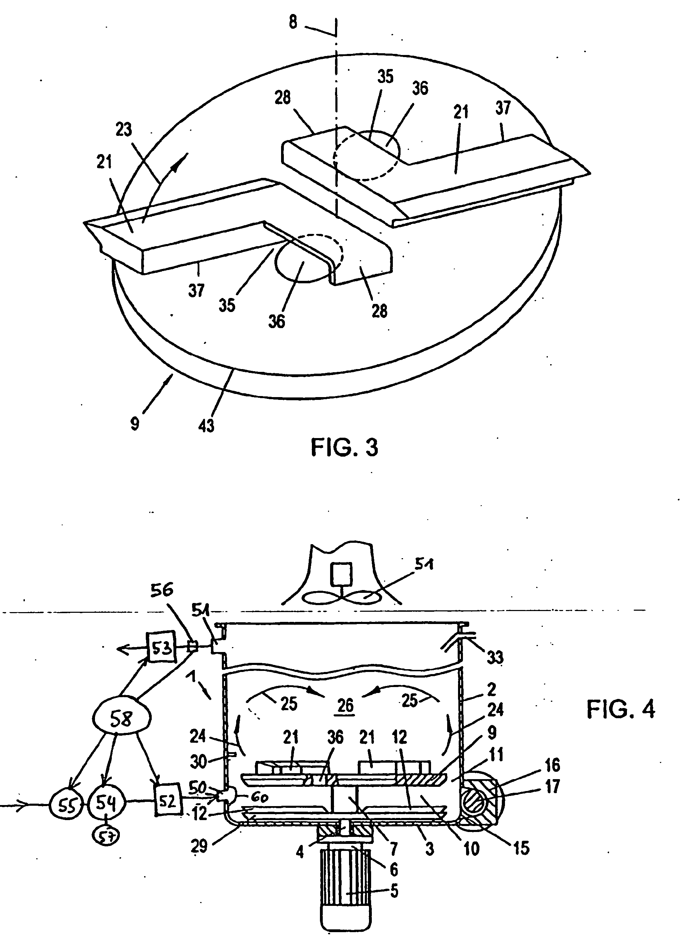

Weiters ist es, wie aus Fig. 3 ersichtlich, zweckmäßig, die Durchbrüche oder zumindest einige derselben mit einer Abdeckung 28 zu versehen, die den Durchbruch 36 rundum abdeckt, bis auf eine nach außen in Richtung zum Umfang 43 der Trägerscheibe 9 gerichtete bzw. radial (in Bezug auf die Achse 8) gerichtete Öffnung 35.

Die Größe, d.h. die Querschnittsfläche der Durchbrüche 36, hängt von der Menge der abzuführenden flüchtigen Stoffe ab. In der Regel ist es ausreichend, die Querschnittsfläche aller Durchbrüche 36 maximal so groß zu bemessen, wie die Querschnittsfläche aller Schnecken bzw. Schneckengehäuse des mit der Austragsöffnung 15 des Behälters 1 in Strömungsverbindung stehenden Extruders bzw. der Schnecken 17.

unteren Bereich der Seitenwand 2 des Aufnahmebehälters 1 ist ein zusätzliches Gaszufuhrmittel 50, angeordnet bzw. mündet in der Seitenwand 2 des Aufnahmebehälters 1 in den Aufnahmebehälter 1 ein. Dieses Gaszufuhrmittel 50 ist als aktives Gaszufuhrmittel 50 in Form einer Düse ausgebildet, d.h. es kann Gas mit Druck ins Innere des Schneidverdichters eingeblasen werden.

Die Düse ist in einer solchen Höhe bzw. in einem solchen Abstand zur Bodenfläche 3 angeordnet, dass sie ständig unterhalb des verfahrensmäßig vorgegebenen Füllstandes der im Schneidverdichter 1 befindlichen bzw. rotierenden Materialteilchen bzw. des Niveaus der bei der Bewegung bzw. Rotation der Materialteilchen ausgebildeten Mischthrombe liegt. Die Düse liegt im Bereich des unteren Drittels der Gesamthöhe des Schneidverdichters 1.

Die Düse ist in der Seitenwand 2 im Bereich zwischen den oberen Mischwerkzeugen 21 bzw. der oberen Trägerscheibe 9 und den unteren Mischwerkzeugen 12 bzw. der unteren Trägerscheibe 29 angeordnet und mündet somit in den unteren Innenraumteil 10 ein. Bei mehr als zwei übereinander angeordneten Trägerscheiben bzw. Mischwerkzeugen münden die Gaszufuhrmittel vorteilhafterweise im Bereich zwischen der obersten und der untersten Trägerscheibe bzw. im Bereich zwischen den obersten und den untersten Mischwerkzeugen. Auf diese Weise kann eine vorteilhafte Durchströmung und Durchmischung und somit eine vorteilhafte Aufarbeitung des Materials sichergestellt werden.

Vorteilhafterweise münden die Gaszufuhrmittel 50, nicht im Bereich der Kanten der Trägerscheiben bzw. der Mischwerkzeuge, sondern, insbesondere jeweils, in den Bereich zwischen jeweils zwei Trägerscheiben bzw. Mischwerkzeugen in den Aufnahmebehälter 1 ein bzw. sind dort angeordnet.

Die Düse ist als singuläre Öffnung in der Seitenwand 2 ausgebildet und weist einen Durchmesser von etwa 70 mm auf. Es können zusätzlich auch weitere derartige Öffnungen auf derselben Höhe, insbesondere gleichmäßig über den Umfang verteilt ausgebildet sein. Die Düse ist mit einer Abdeckung bzw. einem Schild 60 versehen, die/das verhindert, dass das rotierende Material in das Innere der Düse gedrückt werden kann. Die Abdeckung ist dabei vorteilhafterweise stromaufwärts zur Drehrichtung des Materials vor der Düse gelegen. Die Düse ist im wesentlichen auf der der Austragsöffnung 15 gegenüberliegenden Seite des Aufnahmebehälters 1 angeordnet. Im Bereich oberhalb des Materiallevels ist ein Gasabfuhrmittel 51 in Form einer aktiven Gasabsaugung bzw. einer Saugpumpe 53 vorgesehen. Alternativ kann das Gasabfuhrmittel 51 auch als passives Gasabfuhrmittel ausgebildet sein, was in einer einfachen Ausführungsform insbesondere bei einem oben offenen Aufnahmebehälter 1 der Fall ist.

Durch die Düse wird somit trockene, erwärmte Luft mit Druck ins Innere des Behälters 1 geblasen. Diese Luft wird durch die entstehende Zwangsströmung nach oben durch das bewegte Material geführt und nimmt die vorhandene Feuchtigkeit auf bzw. reißt die Störstoffe mit. Über die Absaugung 51 verlässt die mit Störstoffen angereicherte Luft den Aufnahmebehälter 1. Zurück bleibt ein von Störstoffen nahezu befreites Restmaterial. Auf diese Weise kann durch das vorteilhafte synergistische Zusammenwirken der Gasführung 50,51, der beiden Mischwerkzeuge 12,21 und des Durchbruches 36 das Material nahezu vollständig von störenden Substanzen befreit werden.

Die alternative Ausführungsform nach den Fig. 4 und 5 unterscheidet sich von jener nach den Fig. 1 und 2 vor allem dadurch, dass die unteren Mischwerkzeuge 12 nicht pendelnd aufgehängt sind, sondern starr auf einer weiteren Trägerscheibe 29 sitzen, die koaxial zur Trägerscheibe 9 angeordnet ist und über die gleiche Welle 4 zur Drehbewegung angetrieben sein kann. Dadurch kann der Rotor 7 schmäler ausgebildet werden oder als Verlängerung der Welle 4 zur Gänze entfallen. Wie bei der Ausführungsform nach den Fig. 1 und 2 sind die unteren Mischwerkzeuge 12 auf der Höhe der Austragsöffnung 15 des Behälters 1 angeordnet, um das im Raum 10 befindliche, bearbeitete Kunststoffmaterial wirksam in die Einzugsöffnung 27 des Schneckengehäuses 16 fördern zu können.

Die im Raum 10 unterhalb der oberen Trägerscheibe 9 befindlichen weiteren unteren Mischwerkzeuge 12 sind fest auf einer weiteren unterhalb der Trägerscheibe 9 angeordneten unteren Trägerscheibe 29 angeordnet, können aber auch schwenkbar an der Trägerscheibe 9 oder an der Welle 4 aufgehängt sein.

Wie bereits in Fig. 1 und 2 dargestellt ist ein Gaszufuhrmittel 50 im Bereich zwischen den Trägerscheiben 9,29 bzw. zwischen den oberen und den unteren Mischwerkzeugen 21,12 angeordnet und mündet in den Raum 10 ein.

Es ist zweckmäßig, die Temperatur des im Behälter 1 verarbeiteten Materiales zu überwachen. Hierzu ist, wie Fig. 4 zeigt, im oberen Schneidraum 26 oberhalb der Trägerscheibe 9 eine Temperaturmesseinheit 30 und eine Kühleinrichtung 33 vorgesehen, letztere kann als Kühlmitteleindüsung ausgebildet sein.

Wie bereits erwähnt, kann die Abfuhr der in den oberen Schneidraum 26 eintretenden flüchtigen Störsubstanzen durch eine Absaugung 51 unterstützt werden. Hierzu kann, wie Fig. 4 zeigt, oberhalb der in diesem Schneidraum 26 entstehenden Mischtrombe eine Absaugeinrichtung 51 vorgesehen sein.

Entsprechend Fig. 4 ist im Weg des aus dem Aufnahmebehälter 1 austretenden Gases eine Messeinrichtung 56 angeordnet, mit der die Temperatur des austretenden Gases und/oder dessen Feuchtigkeit und/oder der Gehalt der Störstoffe in diesem Gas festgestellt werden kann.

Eine Steuereinrichtung 58 ist schematisch dargestellt, mit der die Vorrichtung bzw. deren Einzelelemente gesteuert bzw. eingeregelt werden können. Im vorliegenden Fall ist die Steuereinrichtung 58 mit den Gasabfuhrmitteln 51 und den Gaszufuhrmitteln 50 verbunden, dargestellt. Im Weg des zugeführten Gases liegen eine Heizeinrichtung 54 sowie eine Gastrocknungseinrichtung 55 und eine Pump- oder Gebläseeinrichtung 52. Mit diesen Einheiten kann unter Einwirkung der Steuereinrichtung 58 die Menge bzw. die Temperatur bzw. der Druck des zugeführten Gases geregelt werden. Es ist auch möglich, die Temperatur bzw. Feuchte des austretenden Gases zur Regelung der Temperatur und/oder Menge und/oder des Druckes des zugeführten Gases heranzuziehen.

Sofern der Aufnahmebehälter 1 als abgeschlossener Behälter ausgebildet ist, so entspricht die Menge des durch die Einbringungsöffnung 50 zugeführten Gases im wesentlichen der Menge des durch den Gasaustritt 51 austretenden Gases. Das austretende Gas kann Abtrennungseinheiten für die mitgenommenen Störstoffe, z.B. Zyklone oder Gasabscheider besitzen und kann als gereinigtes Gas, allenfalls recycliert, wiederum der Gaseintrittsöffnung 50 zugeführt werden.

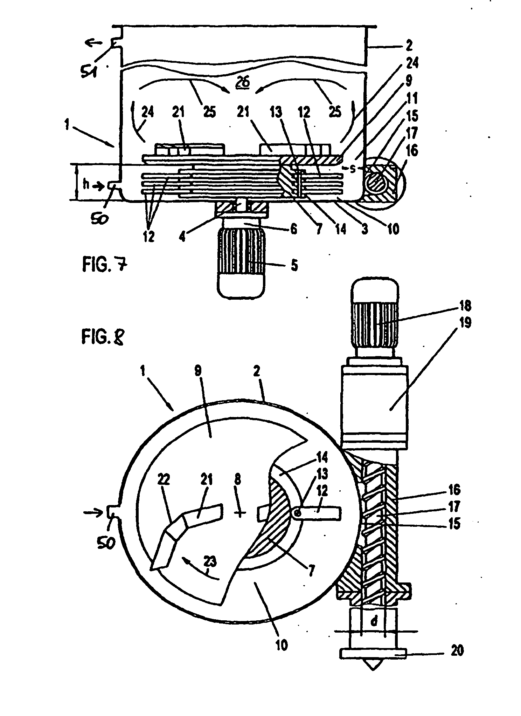

Die Vorrichtung gemäß Fig. 7 und 8 ist ähnlich der in Fig. 1 und 2 dargestellten Ausführungsform, allerdings sind in der oberen Trägerscheibe 9 keine Durchbrüche 36 ausgebildet. Hinsichtlich der Ausgestaltung sei auf die obigen Ausführungen verwiesen.

Auch bei der vorliegenden Ausführungsform wird unterhalb der oberen Trägerscheibe 9 ein freier unterer Innenraumteil 10 gebildet, der mit dem oberhalb der Trägerscheibe 9 befindlichen oberer Innenraumteil 26 des Behälters 1 über den zwischen dem Außenumfang der Trägerscheibe 9 und der Seitenwand 2 des Behälters 1 bestehenden Ringspalt 11 in freier Strömungsverbindung für das bearbeitete Material steht. Durch diesen freien Ringspalt 11 kann somit das behandelte Kunststoffgut aus dem Raum 26 oberhalb der Trägerscheibe 9 ungehindert in den darunterliegenden ringförmigen Innenraumteil 10 gelangen.

In diesem Ringraum 10 sind untere Mischwerkzeuge 12 angeordnet, welche in diesem Ringraum um die Achse 8 umlaufen. Durch die von diesen Werkzeugen 12 auf das Kunststoffmaterial ausgeübte Fliehkraft wird das Kunststoffmaterial in eine Austragöffnung 15 des Behälters 1 gedrückt, welche Öffnung 15 auf der Höhe der Werkzeuge 12 liegt und den unteren Innenraumteil 10 des Behälters 1 mit dem Inneren eines zylindrischen Gehäuses 16 verbindet, in welchem eine Schnecke 17 drehbar gelagert ist.

Die obere Trägerscheibe 9 trägt ebenfalls obere Mischwerkzeuge 21, die jedoch mit der Trägerscheibe 9 fest verbunden sind. Diese oberen Mischwerkzeuge 21 mischen und/oder zerkleinern und/oder erwärmen das im oberen Innenraumteil 26 des Behälters 1 befindliche Material. Für eine wirksame Zerkleinerung ist es zweckmäßig, die Werkzeuge 21 mit Schneidkanten 22 auszubilden.

Im Betrieb ergibt sich beim Umlauf der Trägerscheibe 9 durch den Einfluss der Werkzeuge 21 ein Umlauf der in den Behälter 1 eingebrachten Kunststoffmasse, wobei das Kunststoffmaterial entlang der Seitenwand 2 des Behälters 1 im oberen Innenraumteil 26 hochsteigt (Pfeile 24), und im Bereich der Achse des Behälters 1 wieder nach unten zurückfällt (Pfeile 25). Die so entstehende Mischtrombe durchwirbelt das eingebrachte Material, sodass ein guter Mischeffekt erzielt wird. Ein geringer Anteil des in den Behälter 1 eingebrachten, bereits zerkleinerten Materiales gelangt jedoch durch den Ringspalt 11 hindurch in den unteren Innenraumteil 10 unter der oberen Trägerscheibe 9 und wird dort durch die unteren Mischwerkzeuge 12 bearbeitet. Nach einer kurzen Einlaufzeit stellt sich ein Gleichgewichtszustand ein zwischen dem von der Schnecke 17 aus der Austragöffnung 15 und daher aus dem Ringraum 10 abgeführten Material und dem durch den Ringspalt 11 von oben in den Ringraum 10 zugeführten Material. Dies hat zur Folge, dass es sehr unwahrscheinlich bzw. sogar unmöglich ist, dass ein einmal in den Behälter 1 eingebrachtes Kunststoffteilchen in das Schneckengehäuse 16 gelangt, ohne zuvor eine ausreichende Verweilzeit im Behälter 1 verbracht zu haben bzw. ohne durch die Werkzeuge 12, 21 genügend bearbeitet worden zu sein. Die die Austragöffnung 15 durchsetzende Kunststoffmenge, welche von der Schnecke 17 abgeführt wird, hat daher annähernd gleichmäßige Beschaffenheit, insbesondere, was die Temperatur und die Größe der Kunststoffteilchen betrifft. Die Schnecke 17 muss daher weniger Arbeit in die Kunststoffmasse einbringen, um die Kunststoffmasse auf den gewünschten Plastifizierungsgrad zu bringen, was zur Folge hat, dass hohe thermische SpitzenBeanspruchungen auf das Kunststoffmaterial im Schneckengehäuse 16 entfallen. Dadurch wird das Kunststoffmaterial geschont und an Energie für den Antrieb der Schnecke 17 wesentlich gespart.

Form und Größe des Ringraumes 10 richten sich nach dem ins Auge gefassten Anwendungsgebiet. Der Abstand h, in welchem die Unterseite der Trägerscheibe 9 vom Boden 3 des Behälters 1 liegt, hängt von der Höhe des Rotors 7 ab und auch von der Größe und Lage der Austragöffnung 15. Günstige Verhältnisse ergeben sich, wenn die Höhe h des Ringraumes 10 mindestens gleich, vorzugsweise wesentlich größer ist als der Durchmesser d der Schnecke 17 bzw. dem Innendurchmesser des Schneckengehäuses 16. Im in Fig. 7 dargestellten Ausführungsbeispiel ist h : d = 1,56 und es ist die Anordnung zweckmäßig so getroffen, dass der von der Trägerscheibe 9 abgedeckte, außerhalb des Rotors 7 liegende Teil des Ringraumes 10 annähernd quadratischen Querschnitt hat. Andere Querschnittsformen dieses Ringraumes sind möglich, insbesondere dann, wenn andere Werkzeuge in diesem Ringraum 10 umlaufen, z.B. ein als Schaufelrad ausgebildeter Rotor 7.

Wie ersichtlich, ist für die beschriebene Betriebsweise die Größe des Ringspaltes 11 von Einfluss. Dieser Ringspalt soll nicht zu groß sein, damit verhindert wird, dass größere Materialteilchen durch diesen Ringspalt 11 hindurchtreten können. Anderseits soll dieser Spalt auch nicht zu klein sein, da sonst zu wenig Material unter die Trägerscheibe 9 in den unteren Innenraumteil 10 gelangt und somit die Gefahr besteht, dass die Schnecke 17 ungenügend befüllt wird.

Um sich an unterschiedliche, zu verarbeitende Materialien anpassen zu können, kann die Größe des Ringspaltes 11 veränderlich ausgebildet sein, z.B. mittels von der Trägerscheibe 9 getragener, relativ zu ihr verstellbarer Bauteile, durch welche der Spalt 11 teilweise abgedeckt bzw. in vergrößerter Breite freigegeben werden kann. Solche Bauteile können gegebenenfalls auch an der Wand 2 des Behälters 1 vorgesehen sein. Versuche haben gezeigt, dass sich günstige Werte für die in radialer Richtung gemessene Breite s (Fig. 7) des Ringspaltes 11 im Bereich von 20 bis 150 mm, vorzugsweise 20 bis 100 mm ergeben, unabhängig vom Durchmesser des Aufnahmebehälters 1, jedoch abhängig von der Art des zu verarbeitenden Gutes.

Es ist zweckmäßig, die im unteren Innenraumteil 10 des Aufnahmebehälters 1 befindlichen Werkzeuge 12 so zu gestalten, dass sie das in diesem Innenraumteil 10 befindliche Kunststoffmaterial weniger intensiv bearbeiten als die von der Trägerscheibe 9 getragenen, im oberen Innenraumteil 26 des Behälters 1 umlaufenden Werkzeuge 21.

Auch bei dieser Ausführungsform ist ein Gaszufuhrmittel 50 im Bereich zwischen den Trägerscheiben 9.29 bzw. zwischen den oberen und den unteren Mischwerkzeugen 21,12 angeordnet und mündet in den Raum 10 ein.

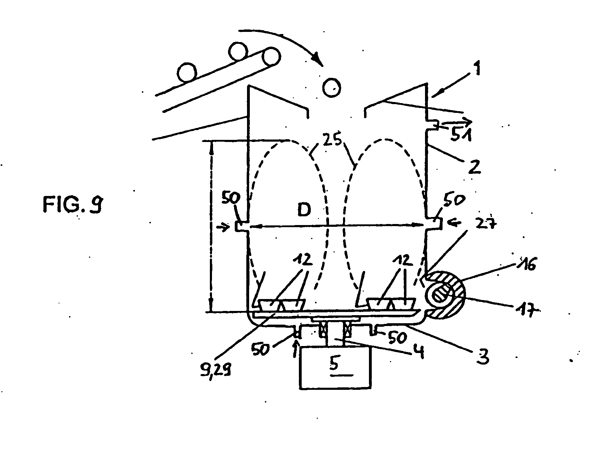

Fig. 9 zeigt ein weiteres Ausführungsbeispiel im Vertikalschnitt. Diese Vorrichtung weist einen Aufnahmebehälter 1 auf, in dem lediglich eine einzige Trägerscheibe 9,29 mit Mischwerkzeugen 12,21 im unteren Bereich knapp über dem Boden 3 in Höhe der Austragsöffnung 15 vorgesehen ist. Diese Mischwerkzeuge 12,21 erzeugen eine Bewegung der Materialteichen bzw. eine Mischthrombe 25.

Im Boden 3 und zwar im innersten Drittelbereich der Bodenfläche 3 ist ein zusätzliches aktives Gaszufuhrmittel 50 in Form eines um die Welle 4, insbesondere nahezu durchgehend, umlaufenden Ringspaltes vorgesehen, über das mit einem Gebläse 52 Gas eingeblasen wird. Zusätzlich ist in der Seitenwand 2 des Behälters 1 und zwar auf der Höhe, in der durch die bewegten Materialteilchen der höchste Druck auf die Seitenwand 2 ausgeübt wird, ein weiteres aktives Gaszufuhrmittel 50a ausgebildet, das ebenfalls als sich über nahezu den gesamten Umfang erstreckender, umlaufender Ringspalt ausgebildet ist. Durch beide Gaszufuhrmittel 50 wird Gas ins Innere des Behälters 1 geblasen, durchsetzt das Material und wird mit Störstoffen angereichert über das Gasabfuhrmittel 51 wieder entfernt.

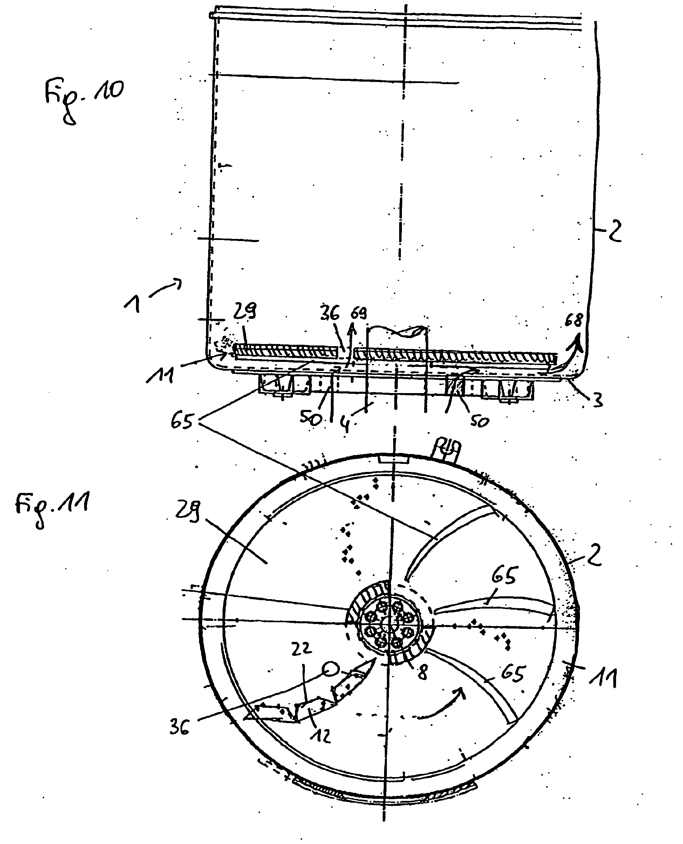

Fig. 10 und 11 zeigen ein weiteres Ausführungsbeispiel im Vertikalschnitt sowie in Draufsicht. Die in Fig. 10 und 11 nur teilweise dargestellte Vorrichtung - so sind nur die unterste Trägerscheibe 29 bzw. die untersten Mischwerkzeuge dargestellt entspricht in den nicht gezeigten Merkmalen den in den Fig. 1 bis 9 gezeigten Vorrichtungen. Es wird somit hinsichtlich der nicht dargestellten Merkmale auf diese Fig. 1 bis 9 verwiesen.

Auf der Unterseite der untersten Trägerscheibe 29 sind mehrere Förderflügel 65 angeordnet. Diese Förderflügel 65 gehen vom Bereich des Zentrums der Trägerscheibe 29 radial und entgegen der Drehrichtung gekrümmt aus und erstrecken sich nahezu über den gesamten Radius der Trägerscheibe 29. Die Förderflügel 65 sind als balkenförmige Stege ausgebildet und ragen in den Bereich zwischen der Trägerscheibe 29 und der Bodenfläche 3 hinein.

Die Förderflügel 65 erzeugen im Betrieb eine Strömung und bewirken einen Materialfluss, der bewirkt, dass kein zu behandelndes Material in diesem Bereich unterhalb der Trägerscheibe 29 verbleibt. Das zu behandelnde Material wird durch die Förderflügel 65 durch den Ringspalt 11 wieder nach oben in den Bereich über der Trägerscheibe 29 gefördert. Wenn in der Trägerscheibe 29 Durchbrüche 36 ausgebildet sind, so kann das Material auch durch diese Durchbrüche 36 durchtreten.

In der Bodenfläche 3 des Aufnahmebehälters 1 sind nahe der zentralen Achse 8 Gaszufuhrmittel 50 ausgebildet, die in den Bereich unterhalb der Trägerscheibe 29 einmünden. Die Gaszufuhrmittel 50 können als aktive oder passive Gaszufuhrmittel ausgebildet sein. Auf diese Weise kann Gas oder Luft in den Bereich unterhalb der Trägerscheibe 29 aktiv eingebracht werden oder wird durch die Förderflügel 65 angesaugt. Das Gas strömt dann, wie in Fig. 10 durch die Pfeile 68 dargestellt, durch den Ringspalt 11 nach oben und unterstützt dabei die Ausbringung des zu behandelnden Materials aus dem Bereich unterhalb der Trägerscheibe 29. Auch strömt das Gas durch allfällig ausgebildete Durchbrüche 36, wie in Fig. 10 durch die Pfeile 69 dargestellt und befördert auch auf diese Weise Material nach oben.

Bei dieser Ausführungsform wirken die Förderflügel 65 somit in vorteilhafter Weise mit den Gaszufuhrmitteln 50 und gegebenenfalls den Durchbrüchen zusammen und gewährleisten auf diese Weise einen effektiven Materialaustrag aus dem Bereich unterhalb der Trägerscheibe 29.

Derartige Förderflügel 65 bzw. eine derartige Kombinationsanordnung aus Förderflügeln 65, Durchbrüchen 36 und/oder Gaszufuhrmitteln 50 können in allen in Fig. 1 bis 9 gezeigten Vorrichtungen ausgebildet sein.

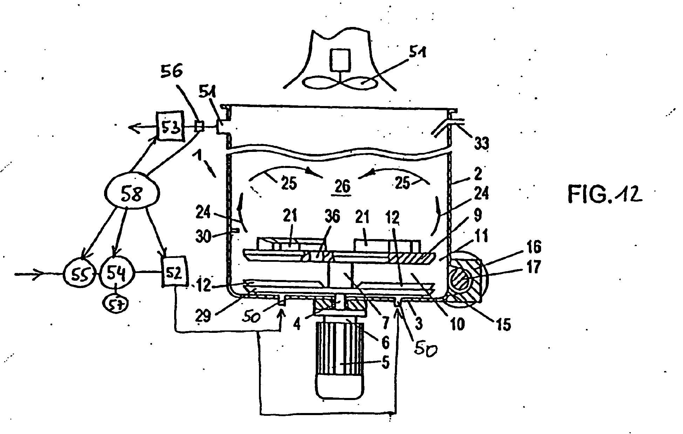

In Fig. 12 ist eine weitere vorteilhafte Ausführungsform dargestellt. Diese ist analog zur Ausführungsform gemäß Fig. 4 und 5 aufgebaut. Es wird diesbezüglich auf die Ausführungen zu Fig. 4 und 5 verwiesen. Im Unterschied zu Fig. 4 und 5 sind die Gaszufuhrmittel 50, allerdings zusätzlich in der Bodenfläche 3 ausgebildet, wie dies auch bei den Ausführungsformen der Fig. 9, 10 bzw. 11 der Fall ist.

Bei all diesen Ausführungsformen der Fig. 1 bis 12 sind, wie dies erfindungsgemäß vorgesehen ist, die Gaszufuhrmittel auch an den Mischwerkzeugen und/oder den Trägerscheiben angeordnet, auch wenn diese Gaszufuhrmittel in den Zeichnungen nicht explizit dargestellt sind.

Gemäß einer vorteilhaften Verfahrensführung kann vorgesehen sein, dass das Gas über in zumindest einem Mischwerkzeug 12,21, insbesondere im bodennächsten Mischwerkzeug 12, vorzugsweise an der der Unterseite bzw. der der Bodenfläche 3 zugewendeten Seite des jeweiligen Mischwerkzeuges 12,21, ausgebildete Gaszufuhrmittel 50, vorzugsweise aktiv mit Druck bzw. über aktive Gaszufuhrmittel 50, in den Aufnahmebehälter 1 eingebracht wird.

Gemäß einer vorteilhaften Vorrichtung kann vorgesehen sein, dass die Gaszufuhrmittel 50, auf zumindest einem Mischwerkzeug 12,21 bzw. zumindest einer Trägerscheibe 9,29, insbesondere auf dem untersten, der Bodenfläche 3 nahen, Mischwerkzeug 12 bzw. der unteren Trägerscheibe 29, vorzugsweise auf der Unterseite bzw. der der Bodenfläche 3 zugewendeten Seite des jeweiligen Mischwerkzeuges 12,21 bzw. der jeweiligen Trägerscheibe 9,29 ausgebildet sind, wobei die Gaszufuhrmittel 50, in diesem Fall vorzugsweise als aktive Gaszufuhrmittel 50a ausgebildet sind.

Gemäß einer weiteren alternativen Vorrichtung kann zusätzlich vorgesehen sein, dass die Gaszufuhrmittel 50, nahe der Achse 8, und insbesondere nahe den beim Umlauf der Trägerscheibe 9 nachlaufenden Rändern 37 der Werkzeuge 21, bzw. nahe dem Durchbruch 36 angeordnet sind.

Gemäß einer vorteilhaften Verfahrensführung kann zusätzlich vorgesehen sein, dass das Gas über in einer Bodenfläche 3 des Aufnahmebehälters 1, unterhalb des der Bodenfläche 3 nächsten Mischwerkzeuges 12, vorzugsweise im inneren Radiusdrittel der Bodenfläche 3, ausgebildete Gaszufuhrmittel 50, in den Aufnahmebehälter 1 eingebracht wird.

Gemäß einer vorteilhaften Verfahrensführung kann zusätzlich vorgesehen sein, dass das Gas über in einer Seitenwand 2 des Aufnahmebehälters 1, insbesondere im Bereich des unteren Drittels der Höhe des Aufnahmebehälters 1 und/oder im Bereich unterhalb des bodennächsten Mischwerkzeuges 12, ausgebildete Gaszufuhrmittel 50, vorzugsweise aktiv mit Druck bzw. über aktive Gaszufuhrmittel 50, in den Aufnahmebehälter 1 eingebracht wird.

Gemäß einer vorteilhaften Verfahrensführung kann zusätzlich vorgesehen sein, dass das Gas bei Vorliegen von zwei oder mehr übereinanderliegenden Mischwerkzeugen 12,21 im Bereich zwischen den Mischwerkzeugen 12,21 eingebracht wird.

Gemäß einer vorteilhaften Verfahrensführung kann zusätzlich vorgesehen sein, dass das Gas in demjenigen Bereich des Behälters 1 eingebracht wird, in dem die im Behälter 1 bewegten bzw. rotierenden Materialteilchen den höchsten Druck auf die Seitenwand 2 des Behälters 1 ausüben.

Gemäß einer vorteilhaften Vorrichtung kann zusätzlich vorgesehen sein, dass die Gaszufuhrmittel 50, auf ihrer dem Inneren des Aufnahmebehälters 1 zugewendeten Seite, insbesondere stromaufwärts der Drehrichtung des Materials im Aufnahmenbehälter 1, eine Abdeckung bzw. einen Schild 60 zum Schutz vor dem im Aufnahmebehälter 1 befindlichen Material aufweisen.

Gemäß einer vorteilhaften Vorrichtung kann zusätzlich vorgesehen sein, dass die Gaszufuhrmittel 50, in der Bodenfläche 3 des Aufnahmebehälters 1 unterhalb des untersten bodennahen Mischwerkzeuges 12, vorzugsweise innerhalb des innersten Radiusdrittel der Bodenfläche 3, ausgebildet sind.

Gemäß einer vorteilhaften Vorrichtung kann zusätzlich vorgesehen sein, dass die Gaszufuhrmittel 50, in Form eines um die Durchführung der Antriebswelle 4 durch die Bodenfläche 3 herum verlaufenden Ringschlitzes ausgebildet sind.

Gemäß einer vorteilhaften Vorrichtung kann zusätzlich vorgesehen sein, dass die Gaszufuhrmittel 50, in der Seitenwand 2 des Aufnahmebehälters 1 angeordnet sind bzw. in der Seitenwand 2 des Aufnahmebehälters 1 in den Aufnahmebehälter 1 einmünden bzw. ausgebildet sind, wobei die Gaszufuhrmittel 50, in diesem Fall vorzugsweise als aktive Gaszufuhrmittel 50 ausgebildet sind.

Gemäß einer vorteilhaften Vorrichtung kann zusätzlich vorgesehen sein, dass die Gaszufuhrmittel 50, im Aufnahmebehälter 1 in einer Höhe bzw. in einem Abstand zur Bodenfläche 3 angeordnet sind, in der die Gaszufuhrmittel 50, ständig unterhalb des verfahrensmäßig vorgegebenen Füllstandes der im Aufnahmebehälter 1 befindlichen bzw. rotierenden Materialteilchen bzw. des Niveaus der bei der Bewegung bzw. Rotation der Materialteilchen ausgebildeten Mischthrombe liegen, wobei die Gaszufuhrmittel 50 insbesondere im Bereich des unteren Drittels der Höhe des Aufnahmebehälters 1, vorzugsweise unterhalb des untersten bodennahen Mischwerkzeuges 12, angeordnet sind.

Gemäß einer vorteilhaften Vorrichtung kann zusätzlich vorgesehen sein, dass die Gaszufuhrmittel 50, in der Seitenwand 2 im Bereich zwischen den zumindest zwei übereinander angeordneten Trägerscheiben 9,29 bzw. Mischwerkzeugen 12,21 bzw. im Bereich zwischen den obersten und den untersten Trägerscheiben bzw. Mischwerkzeugen, vorzugsweise zwischen den oberen Mischwerkzeugen 21 bzw. der oberen Trägerscheibe 9 und den unteren bzw. untersten Mischwerkzeugen 12 bzw. der unteren Trägerscheibe 29 angeordnet sind bzw. in den unteren Innenraumteil 10 einmünden, wobei die Gaszufuhrmittel 50, vorzugsweise, insbesondere jeweils, in den Bereich zwischen jeweils zwei Trägerscheiben bzw. Mischwerkzeugen, insbesondere mittig zwischen diesen, einmünden bzw. dort angeordnet sind.

Gemäß einer vorteilhaften Vorrichtung kann zusätzlich vorgesehen sein, dass die Gaszufuhrmittel 50, in demjenigen Bereich der Seitenwand 2 des Behälters 1 angeordnet sind, in dem die im Behälter 1 bewegten bzw. rotierenden Materialteilchen den höchsten Druck auf die Seitenwand 2 des Behälters 1 ausüben.

Gemäß einer vorteilhaften Vorrichtung kann zusätzlich vorgesehen sein, dass die Gaszufuhrmittel 50, in der Seitenwand 2 auf gleicher Höhe über den Umfang der Innenwand des Aufnahmebehälters 1, vorzugsweise gleichmäßig verteilt, angeordnet sind.

Gemäß einer vorteilhaften Vorrichtung kann zusätzlich vorgesehen sein, dass die Gaszufuhrmittel 50, in der Seitenwand 2 in Form eines umfänglich, insbesondere vollständig, umlaufenden Ringspaltes ausgebildet sind.

## Patentansprüche

1. Verfahren zur Aufbereitung eines in einem Aufnahmebehälter bzw. Schneidverdichter (1) durch zumindest ein Mischwerkzeug (12,21) bewegten gemischten, erwärmten und gegebenenfalls zerkleinerten, stückig bzw. teilchenförmig vorliegenden, vorzugsweise thermoplastischen, Polymermaterials, wobei im Zuge des Verfahrens unerwünschte Störstoffe, die die Aufbereitung bzw. weitere Bearbeitung des Materials beeinträchtigen, beispielsweise flüchtige Substanzen, insbesondere Feuchtigkeit bzw. Wasserdampf, aus dem Material entfernt werden, indem ein Gas, insbesondere Luft oder ein Inertgas, in einem Bereich unterhalb des Niveaus des im Betrieb im Aufnahmebehälter (1) befindlichen Materials bzw. unterhalb des Materiallevels der sich ausbildenden Mischthrombe ins Innere des Aufnahmebehälters (1) eingebracht wird, wobei das Gas unter Ausbildung einer Zwangsströmung zumindest durch einen Teilbereich des Materials durchgeführt wird und wobei anschließend das nun mit Störstoffen angereicherte bzw. gesättigte Gas in einem Bereich oberhalb des Niveaus des im Betrieb im Aufnahmebehälter (1) befindlichen Materials bzw. oberhalb des Materiallevels der Mischthrombe aus dem Aufnahmebehälter (1) ausgebracht wird, **dadurch gekennzeichnet, dass** das Gas über Gaszufuhrmittel (50) in den Aufnahmebehälter (1) eingebracht wird, die in oder auf zumindest einem Mischwerkzeug (12,21) und/oder einer das Mischwerkzeug (12,21) tragenden Trägerscheibe (9,29) ausgebildet oder angeordnet sind.

2. Verfahren nach Anspruch 1, **dadurch gekennzeichnet, dass** das Gas über im bodennächsten Mischwerkzeug (12) und/oder der bodennächsten Trägerscheibe (9,29) ausgebildete Gaszufuhrmittel (50) eingebracht wird.

3. Verfahren nach Anspruch 1 oder 2, **dadurch gekennzeichnet, dass** das Gas über an der der Unterseite bzw. der der Bodenfläche (3) zugewendeten Seite des jeweiligen Mischwerkzeuges (12,21) und/oder der bodennächsten Trägerscheibe (9,29) ausgebildete Gaszufuhrmittel (50) eingebracht wird.

4. Verfahren nach einem der Ansprüche 1 bis 3, **dadurch gekennzeichnet, dass** das Gas über zumindest ein aktives Gaszufuhrmittel (50), beispielsweise über mit Pump- oder Gebläseeinrichtungen (52) beaufschlagbare Düsen bzw. Blasöffnungen, aktiv mit Druck in den Aufnahmebehälter (1) unterhalb des Materiallevels eingedüst bzw. eingeblasen wird
und/oder
dass das Gas über zumindest ein aktives Gasabfuhrmittel (51) aktiv aus dem Bereich des Aufnahmebehälters (1) oberhalb des Materiallevels abgesaugt bzw. abgepumpt wird
und/oder
dass das Gas vor der Zufuhr erwärmt und/oder getrocknet wird
und/oder
dass bei dem aus dem Aufnahmebehälter (1) austretenden Gas die Temperatur, die Feuchtigkeit und/oder der Gehalt an Störstoffen gemessen werden und die Steuerung der Menge, der Temperatur und/oder der Feuchtigkeit des in den Aufnahmebehälter (1) eintretenden Gases in Abhängigkeit dieser gemessenen Werte erfolgt.

5. Vorrichtung zur Durchführung des Verfahrens nach einem der Ansprüche 1 bis 4, mit zumindest einem, insbesondere im wesentlichen trichterförmigen oder zylindrischen, eine Bodenfläche (3) und eine Seitenwand (2) aufweisenden, Aufnahmebehälter bzw. Schneidverdichter (1), in dem zumindest ein, insbesondere um eine vertikale Achse (8) drehbares, *gegebenenfalls auf einer Trägerscheibe* (9,29) *angeordnetes,* Mischwerkzeug (12,21) *vorgesehen* ist, *wobei das Mischwerkzeug (12,21) und die Trägerscheibe (9,29) oberhalb der Bodenfläche (3) angeordnet und von dieser beabstandet sind, wobei das Mischwerkzeug (12,21)* ein im Inneren des Aufnahmebehälters (1) vorgelegtes, aufzubereitendes, vorzugsweise stückiges bzw. teilchenförmiges, *Polymermaterial*, insbesondere in Form von nicht geschmolzenen Polymerteilchen, bewegt, mischt, erwärmt bzw. gegebenenfalls zerkleinert bzw. auf dieses Material einwirkt, wobei im Aufnahmebehälter (1) unterhalb des Niveaus des im Betrieb im Aufnahmebehälter (1) befindlichen Materials bzw. unterhalb des Materiallevels einer sich im Betrieb ausbildenden Mischthrombe zumindest ein Gaszufuhrmittel (50) für den Eintritt eines Gases, insbesondere von Luft oder Inertgas, ins Innere des Aufnahmebehälters (1) ausgebildet bzw. angeschlossen ist und wobei im Aufnahmebehälter (1) oberhalb des Niveaus des im Betrieb im Aufnahmebehälter (1) befindlichen Materials bzw. oberhalb des Materiallevels der Mischthrombe zumindest ein Gasabfuhrmittel (51) für den Austritt des mit Störstoffen, insbesondere mit Wasserdampf, angereicherten bzw. gesättigten Gases aus dem Aufnahmebehälter (1) ausgebildet bzw. angeschlossen ist, **dadurch gekennzeichnet, dass** die Gaszufuhrmittel (50) *in oder* auf dem Mischwerkzeug (12,21) und/oder der Trägerscheibe (9,29) ausgebildet oder angeordnet sind.

6. Vorrichtung nach Anspruch 5, **dadurch gekennzeichnet, dass** die Gaszufuhrmittel (50) auf dem untersten, der Bodenfläche (3) nahen, Mischwerkzeug (12) und/oder der unteren Trägerscheibe (29) ausgebildet oder angeordnet sind.

7. Vorrichtung nach Anspruch 5 oder 6, **dadurch gekennzeichnet, dass** die Gaszufuhrmittel (50) auf der Unterseite bzw. der der Bodenfläche (3) zugewendeten Seite des jeweiligen Mischwerkzeuges (12,21) und/oder der jeweiligen Trägerscheibe (9,29) ausgebildet oder angeordnet sind.

8. Vorrichtung nach einem der Ansprüche 5 bis 7, **dadurch gekennzeichnet, dass** zumindest eine Schnecke (17) zum Abtransport des Materiales aus dem Aufnahmebehälter (1) vorgesehen ist, deren Gehäuse (16) mit einer Einzugsöffnung (27) an eine Austragöffnung (15) des Aufnahmebehälters (1), beispielsweise radial oder tangential, angeschlossen ist, wobei die Austragöffnung (15) in der Seitenwand (2) nahe der Bodenfläche (3) des Aufnahmebehälter (1) angeordnet ist.

9. Vorrichtung nach einem der Ansprüche 5 bis 8, **dadurch gekennzeichnet, dass** jedes Mischwerkzeug (12,21) auf einer Trägerscheibe (9,29) angeordnet ist, die durch eine in den Innenraum des Aufnahmebehälters (1) hineingeführte Welle (4) zum Umlauf um die Achse (8) der Welle (4) angetrieben ist.

10. Vorrichtung nach einem der Ansprüche 5 bis 9, **dadurch gekennzeichnet, dass** im Aufnahmebehälter (1) zumindest zwei übereinander angeordnete Mischwerkzeuge (12,21) vorgesehen sind, vorzugsweise genau zwei übereinander angeordnete Mischwerkzeuge (12,21), nämlich, insbesondere auf einer oberen Trägerscheibe (9) angeordnete, obere Mischwerkzeuge (21) und, insbesondere auf einer unteren bodennahen Trägerscheibe (29) angeordnete, untere bodennahe bzw. dem Boden (3) nächste Mischwerkzeuge (12), wobei im Aufnahmebehälter (1) oberhalb der oberen Mischwerkzeuge (21) ein oberer Innenraumteil (26) sowie unterhalb der oberen Mischwerkzeuge (21) ein in demselben Aufnahmebehälter (1) befindlicher, unterer Innenraumteil (10) ausgebildet ist, in welchem die bodennahen Mischwerkzeuge (12) und die Austragsöffnung (15) angeordnet sind, wobei der obere Innenraumteil (26), insbesondere über einen, zwischen dem Außenumfang der oberen Trägerscheibe (9) und der Seitenwand (2) des Aufnahmebehälters (1) bestehenden freien Ringspalt (11), mit dem unteren Innenraumteil (10) des Aufnahmebehälters (1) in Verbindung steht, wobei beim Umlauf der oberen Mischwerkzeuge (21) ein Anteil des im oberen Innenraumteil (26) befindlichen Materiales, insbesondere durch den Ringspalt (11) hindurch, in den unteren Innenraumteil (10) gelangt und von dort durch die untere bodennahen Mischwerkzeuge (12) in die Austragsöffnung (15) gefördert wird.

11. Vorrichtung nach einem der Ansprüche 5 bis 10, **dadurch gekennzeichnet, dass** die obere Trägerscheibe (9) zumindest einen, vorzugsweise nahe der Achse (8), und insbesondere nahe den beim Umlauf der Trägerscheibe (9) nachlaufenden Rändern (37) der Werkzeuge (21), angeordneten, die Trägerscheibe (9) durchsetzenden Durchbruch (36) aufweist, welcher den oberen Innenraumteil (26) mit dem unteren Innenraumteil (10) verbindet.

12. Vorrichtung nach einem der Ansprüche 5 bis 11, **dadurch gekennzeichnet, dass** die Gaszufuhrmittel (50) nahe der Achse (8), und insbesondere nahe den beim Umlauf der Trägerscheibe (9) nachlaufenden Rändern (37) der Werkzeuge (21), bzw. nahe dem Durchbruch (36) angeordnet sind.

13. Vorrichtung nach einem der Ansprüche 5 bis 12, **dadurch gekennzeichnet, dass** die Gaszufuhrmittel (50) als passive Gaszufuhrmittel (50), beispielsweise als Durchgangsöffnungen, ausgebildet sind, durch die das Gas passiv, beispielsweise durch Unterdruck im Aufnahmebehälter (1), ins Innere des Aufnahmebehälters (1) einsaugbar ist oder dass die Gaszufuhrmittel (50) als aktive Gaszufuhrmittel (50), beispielsweise als über Pump- oder Gebläseeinrichtungen (52) beaufschlagbare Düsen od. dgl., ausgebildet sind, durch die das Gas ins Innere des Aufnahmebehälters (1) mit Druck aktiv einblas-, eindüs-, bzw. einpumpbar ist
und/oder
dass die Gasabfuhrmittel (51) als passive Gasabfuhrmittel (51), beispielsweise als Durchgangsöffnungen, ausgebildet sind, durch die das Gas passiv, beispielsweise durch Überdruck im Aufnahmebehälter (1), aus dem Aufnahmebehälter (1) ausbringbar ist oder dass die Gasabfuhrmittel (51) als aktive, beispielsweise über Saugeinrichtungen (53) beaufschlagbare, Gasabfuhrmittel (51) ausgebildet sind, durch die das Gas aus dem Aufnahmebehälter (1) aktiv absaugbar bzw. abpumpbar ist
und/oder
dass eine den Gaszufuhrmitteln (50) vorgeschaltete Heizeinrichtung (54) vorgesehen ist, über die das ins Innere des Aufnahmebehälters (1) einzubringende Gas erwärmbar ist und/oder dass eine den Gaszufuhrmitteln (50) vorgeschaltete Gastrocknungseinrichtung (55) vorgesehen ist, über die das ins Innere des Aufnahmebehälters (1) einzubringende Gas getrocknet wird
und/oder
dass die Gaszufuhrmittel (50) zur Regulierung der Gaszufuhr und/oder die Gasabfuhrmittel (51) zur Regulierung der Gasabfuhr zumindest teilweise verschließbar bzw. steuerbar sind
und/oder
dass die Gaszufuhrmittel (50) als einzelne, singuläre Öffnungen mit einem Durchmesser zwischen 10 und 300 mm, vorzugsweise zwischen 50 und 90 mm ausgebildet sind
und/oder
dass die Gaszufuhrmittel (50) bündig mit der Innenwand des Mischwerkzeuges (12,21) abschließen und insbesondere nicht von der Innenseite des Mischwerkzeuges (12,21) ins Innere des Behälters (1) vor- bzw. abstehen.

14. Vorrichtung nach einem der Ansprüche 5 bis 13, **dadurch gekennzeichnet, dass** auf der der Bodenfläche (3) zugewendeten Unterseite einer untersten Trägerscheibe (29), und gegebenenfalls auch auf den Unterseiten allfälliger weiterer Trägerscheiben (9), zumindest ein, vorzugsweise mehrere, von der Trägerscheibe (29) abragende, insbesondere radial und gegebenenfalls gekrümmt ausgebildete, Förderflügel (65) ausgebildet sind, die eine Material- und Gasströmung vom Bereich unterhalb der untersten Trägerscheibe (29) nach oben, insbesondere über den Ringspalt (11) und/oder die Durchbrüche (36) in den Bereich oberhalb der untersten Trägerscheibe (29), bewirken.

15. Vorrichtung nach einem der Ansprüche 5 bis 14, **dadurch gekennzeichnet, dass** die Gasabfuhrmittel (51) in einem der Bodenfläche (3) des Aufnahmebehälters (1) bzw. dem Material bzw. der Mischthrombe fernen Bereich, insbesondere im Deckel des Aufnahmebehälters (1), angeordnet sind
und/oder
dass zumindest eine vom abgeführten Gas beaufschlagte, insbesondere den Gasabfuhrmitteln (51) nachgeschaltete, Messeinrichtung (56) zur Messung der Temperatur, und/oder gegebenenfalls der Feuchtigkeit bzw. des Gehaltes der Störstoffe im aus den Gasabfuhrmitteln (51) aus dem Aufnahmebehälter (1) austretenden Gas, vorgesehen ist
und/oder
dass eine Steuereinrichtung (58) vorgesehen ist, die bei Vorhandens ein einer der folgenden Vorrichtungen mit der Heizeinrichtung (54) und/oder der Gastrocknungseinrichtung (55) und/oder der Pump- oder Gebläseeinrichtung (52) und/oder der Saugeinrichtung (53) verbunden ist und diese gegebenenfalls in Abhängigkeit von vorgegebenen Materialparametern und/oder der Temperatur des austretenden Gases und/oder Art der Störstoffe steuert bzw. regelt.

## Claims

1. A process for treatment of a, preferably thermoplastic, polymer material moved, mixed, heated and, optionally, comminuted in a reception vessel or cutter condenser (1) by at least one mixing tool (12, 21) and is in lumps or particles, wherein in the course of the process undesirable disturbing matters are removed from the material, which affect processing or further treatment of the material, for example volatile substances, particularly humidity or steam, by introducing a gas, particularly air or an inert gas, into a region below the level of the material being present in the reception vessel (1) during operation, or below the level of material of the mixing vortex formed, into the interior of the reception vessel (1), wherein, while forming a forced stream, the gas is conducted at least through a partial portion of the material, and wherein subsequently the gas, now being enriched or saturated with disturbing matters, is discharged from the reception vessel (1) in a region above the level of the material present in the reception vessel (1) during operation, or above the level of material of the mixing vortex, **characterised in that** the gas is introduced into the reception vessel (1) through gas supply means (50), which are formed or arranged in or on at least one mixing tool (12, 21) and/or in or on a carrier disk (9, 29) carrying the mixing tool (12, 21).

2. Process according to claim 1, **characterised in that** the gas is introduced through gas supply means (50) formed in the mixing tool (12) next to the bottom and/or in the carrier disk (9, 29) next to the bottom.

3. Process according to claim 1 or 2, **characterised in that** the gas is introduced through gas supply means (50) formed at the lower side or that side which faces the bottom surface (3) of the respective mixing tool (12, 21) and/or the carrier disk (9, 29) next to the bottom.

4. Process according to any of claims 1 to 3, **characterised in that** the gas is actively injected or blown under pressure into the reception vessel (1) below the level of material through at least one active gas supply means (50), for example through nozzles or blow openings to be supplied by pumping or blower devices (52),
and/or
that the gas is sucked or pumped actively from the region of the reception vessel (1) above the level of material through at least one active gas discharge means (51)
and/or
that the gas is heated and/or dried prior to supplying it
and/or
that the temperature of the gas discharged from the reception vessel (1) and/or the humidity and/or the contents of disturbing matters are measured and control of the quantity, the temperature and/or of the humidity of the gas entering the reception vessel (1) is effected in dependence on these measured values.

5. An apparatus for carrying out the process according to any of claims 1 to 4, comprising at least one, in particular substantially funnel-shaped or cylindrical, reception vessel or cutter condenser (1), which includes a bottom surface (3) and a side wall (2), and in which at least one mixing tool (12, 21) is provided, which in particular rotates about a vertical axis (8) and is optionally arranged on a carrier disk (9, 29), wherein said mixing tool (12, 21) and the carrier disk (9, 29) are arranged above and spaced from the bottom surface (3), and wherein the mixing tool (12, 21) moves, mixes, heats and optionally comminutes a polymer material present in the interior of the reception vessel (1) to be processed, preferably in lumps or in particles, particularly in the form of non-molten polymer particles, and acts upon this material, at least one gas supply means (50) for the entrance of a gas, particularly of air or of an inert gas, into the interior of the reception vessel (1) being formed or connected in the reception vessel (1) below the level of the material being present in the reception vessel (1) during operation, or below the level of material of the mixing vortex formed, wherein at least one gas discharge means (51) for discharging the gas enriched or saturated with disturbing matters, particularly with steam, from the reception vessel (1) is formed or connected above the level of the material being present in the reception vessel (1) during operation, **characterised in that** the gas supply means (50) are formed or arranged in or on the mixing tool (12, 21) and/or in or on the carrier disk (9, 29).

6. Apparatus according to claim 5, **characterised in that** the gas supply means (50) are formed or arranged on the lowermost mixing tool (12) near the bottom surface (3) and/or in the lower carrier disk (29).

7. Apparatus according to claim 5 or 6, **characterised in that** the gas supply means (50) are formed or arranged on the lower side or on the side facing the bottom surface (3) of the respective mixing tool (12, 21) and/or of the respective carrier disk (9, 29).

8. Apparatus according to any of claims 5 to 7, **characterised in that** at least one screw (17) for the discharge of the material from the reception vessel (1) is provided, the barrel of which being connected, for example radial or tangentially, with an entrance opening (27) to a discharge opening (15) of the reception vessel (1), wherein the discharge opening (15) is arranged in the side wall (2) near the bottom surface (3) of the reception vessel (1).

9. Apparatus according to any of claims 5 to 8, **characterised in that** each mixing tool (12, 21) is arranged on a carrier disk (9, 29) which, by a shaft (4) led into the inner space of the reception vessel (1), is driven for rotation about the axis (8) of the shaft (4).

10. Apparatus according to any of claims 5 to 9, **characterised in that** at least two mixing tools (12, 21) are provided one above the other within the reception vessel (1), preferably exactly two mixing tools (12, 21) arranged one above the other, namely upper mixing tools (21), in particular being arranged on an upper carrier disk (9), and lower mixing tools (12) near to the bottom or next to the bottom (3), in particular being arranged on an lower carrier disk (9) near the bottom or next to the bottom (3), wherein an upper inner space (26) is formed above the upper mixing tools (21) in the reception vessel (1), and a lower inner space (10) is formed below the upper mixing tools (21) situated in the same reception vessel (1), in which the mixing tools (12) near to the bottom and the discharge opening (15) are arranged, wherein the upper inner space (26) is in communication with the lower inner space (10) of the reception vessel (1), particularly through a free annular gap (11) existing between the outer circumference of the upper carrier disk (9) and the side wall (2) of the reception vessel (1), wherein with rotating upper mixing tools (21), a proportion of the material present in the upper inner space (26) reaches the lower inner space (10), particularly through the annular gap (11), and is conveyed from there into the discharge opening (15) by the lower mixing tools (12) near the bottom.

11. Apparatus according to any of claims 5 to 10, **characterised in that** the upper carrier disk (9) comprises at least one through-hole (36), which penetrates the carrier disk (9), and which is preferably arranged near the axis (8), connecting the upper inner space (26) to the lower inner space 10) and, in particular, near those borders (37) of the tools (21), which run behind during rotation of the carrier disk (9).

12. Apparatus according to any of claims 5 to 11, **characterised in that** the gas supply means (50) are arranged near the axis (8), and in particular near those borders (37) of the tools (21), which run behind during rotation of the carrier disk (9), or near the through-hole (36).

13. Apparatus according to any of claims 5 to 12, **characterised in that** the gas supply means (50) are formed as passive gas supply means (50), for example as through openings, through which the gas is only sucked passively into the interior of the reception vessel (1), for example by a sub-pressure in the reception vessel (1), or that the gas supply means (50) are formed as active gas supply means (50), for example as nozzles or the like to be supplied by pumping or blower devices (52), through which the gas may be blown, injected or pumped actively under pressure into the interior of the reception vessel (1)
and/or
that the gas discharge means (51) are formed as passive gas discharge means (51), for example as through openings, through which the gas is discharged passively from the reception vessel (1), for example by over-pressure in the reception vessel (1), or that the gas discharge means (51) are formed as active gas discharge means (51), for example to be biased by suction devices (53), by which the gas may actively be sucked or pumped off from the reception vessel (1).
and/or
that a heating device (54), pre-posed to the gas supply means (50), is provided by which the gas to be introduced into the interior of the reception vessel (1) may be heated and/or that a gas drying device (55), pre-posed to the gas supply means (50), is provided by which the gas to be introduced into the interior of the reception vessel (1) may be dried and/or
that the gas supply means (50) for regulating the gas supply and/or the gas discharge means (51) for regulating the gas discharge are at least partially able to be closed or controlled
and/or
that the gas supply means (50) are formed as individual occasional openings, which have a diameter between 10 and 300 mm, preferably between 50 and 90 mm
and/or
that the gas supply means (50) are flush with the inner wall of the mixing tool (12, 21) and in particular do not project or protrude from the inner side of the mixing tool (12, 21) into the interior of the vessel (1).

14. Apparatus according to any of claims 5 to 13, **characterised in that** on the lower side facing the bottom surface (3) of a lowermost carrier disk (29), and optionally also on the lower sides of optional further carrier disks (9), at least one, preferably several, conveyer blades (65) protruding from the carrier disk (29), particularly radial and optionally formed in a curved manner, are formed, which cause a material and gas stream from the region below the lowermost carrier disk (29) upwards, particularly to the region above the lowermost carrier disk (29), in particular through the annular gap (11) and/or through the through-holes (36).

15. Apparatus according to any of claims 5 to 14, **characterised in that** the gas discharge means (51) are arranged in a region remote from the bottom surface (3) of the reception vessel (1) or from the material or from the mixing vortex, particularly in the lid of the reception vessel (1)
and/or
that at least one measuring device (56) is provided and is supplied with the gas discharged, and in particular is postponed to the gas discharge means (51) for measuring the temperature and/or, optionally, the humidity or the contents of disturbing matters in the gas, which exits from the gas discharge means (51) and from the reception vessel (1) and/or
that a control device (58) is provided which with existing of one of the following devices is connected to the heating device (54) and/or to the gas drying device (55) and/or to the pumping or blower device (52) and/or to the suction device (53) and optionally controls or regulates them in dependence on predetermined material parameters and/or on the temperature of the exiting gas and/or on the nature of the disturbing matters.

## Revendications

1. Procédé pour la préparation d'un matériau polymérique, de préférence thermoplastique, qui est mû, mélangé, chauffé et, le cas échéant, broyé dans un réservoir de réception ou coupeur/compresseur (1) par au moins un outil mélangeur (12, 21), et existe en morceaux ou en particules, dans lequel au cours du procédé des substances perturbantes indésirables sont éliminées du matériau, qui gênent la préparation ou le traitement ultérieur du matériau, par exemple des substances volatiles, en particulier de l'humidité ou de la vapeur d'eau, en introduisant un gaz, particulièrement de l'air ou un gaz inerte, à l'intérieur du réservoir de réception (1) dans une zone au-dessous du niveau du matériau existant dans le réservoir de réception (1) pendant le fonctionnement ou au-dessous du niveau de matériau du vortex mélangeur se développant, dans lequel le gaz est passé par au moins une zone partielle du matériau tout en formant un courant forcé, et dans lequel ensuite le gaz, maintenant enrichi ou saturé de substances perturbantes, est enlevé du réservoir de réception (1) dans une zone au-dessus du niveau du matériau existant dans le réservoir de réception (1) pendant le fonctionnement ou au-dessus du niveau de matériau du vortex mélangeur, **caractérisé en ce, que** le gaz est introduit dans le réservoir de réception (1) à travers des moyens d'admission de gaz (50), qui sont formés ou disposés dans ou sur au moins un outil mélangeur (12, 21) et/ou dans ou sur un disque porteur (9, 29), qui porte l'outil mélangeur (12, 21).

2. Procédé selon la revendication 1, **caractérisé en ce, que** le gaz est introduit à travers des moyens d'admission de gaz (50) formés dans l'outil mélangeur (12) le plus proche du fond et/ou dans le disque porteur (9, 29) proche du fond.

3. Procédé selon la revendication 1 ou 2, **caractérisé en ce, que** le gaz est introduit à travers des moyens d'admission de gaz (50) formés au côté de l'outil mélangeur respectif (12, 21) en face de la partie inférieure ou de la surface de fond (3) et/ou du disque porteur (9, 29) le plus proche du fond.

4. Procédé selon une quelconque des revendications 1 à 3, **caractérisé en ce, que** le gaz est injecté ou insufflé activement sous pression dans le réservoir de réception (1) au-dessous du niveau de matériau à travers au moins un moyen actif d'admission de gaz (50), par exemple à travers des buses ou des ouvertures de soufflage fournies par des dispositifs à pompe ou à souffleur (52)
et/ou
que le gaz est aspiré ou pompé activement de la zone du réservoir de réception (1) au-dessus du niveau de matériau à travers au moins un moyen d'évacuation de gaz (51) et/ou
que le gaz est chauffé et/ou séché avant l'admission
et/ou
que la température, l'humidité et/ou la teneur de substances perturbantes du gaz sortant du réservoir de réception (1) sont mesurées, et la commande de la quantité, de la température et/ou de l'humidité du gaz entrant dans le réservoir de réception (1) est effectuée en dépendance de ces valeurs mesurées.

5. Dispositif pour la mis en oeuvre du procédé selon une quelconque des revendications 1 à 4, comprenant au moins un réservoir de réception ou coupeur/compresseur (1), en particulier sensiblement en forme d'entonnoir ou cylindrique, qui comprend une surface de fond (3) et une paroi latérale (2) et dans lequel au moins un outil mélangeur (12, 21) est prévu, en particulier rotatif autour d'un axe vertical (8), le cas échéant disposé sur un disque porteur (9, 29), ledit outil mélangeur (12, 21) et le disque porteur (9, 29) sont disposés au-dessus de la surface de fond (3) et sont espacés de celle-ci, dans lequel l'outil mélangeur (12, 21) meut, mélange, chauffe ou, le cas échéant, broie un matériau polymérique présenté dans l'intérieur du réservoir de réception (1) à traiter, préférablement existant en morceaux ou en forme des particules, ou agit sur ce matériau, dans lequel au moins un moyen d'admission de gaz (50) pour l'entrée d'un gaz, particulièrement de l'air ou de gaz inerte, dans l'intérieur du réservoir de réception (1) est formé dans le ou relié au réservoir de réception (1) au-dessous le niveau du matériau existant dans le réservoir de réception (1) pendant le fonctionnement ou au-dessous du niveau de matériau du vortex mélangeur se développant, et dans lequel au moins un moyen d'évacuation de gaz (51) pour la sortie du gaz enrichi ou saturé de substances perturbantes, particulièrement de vapeur d'eau, du réservoir de réception (1) est formé ou relié au-dessus le niveau du matériau existant dans le réservoir de réception (1) pendant le fonctionnement ou au-dessus du niveau de matériau du vortex mélangeur, **caractérisé en ce, que** les moyens d'admission de gaz (50) sont formés ou disposés dans ou sur l'outil mélangeur (12, 21) et/ou dans ou sur le disque porteur (9, 29).

6. Dispositif selon la revendication 5, **caractérisé en ce, que** les moyens d'admission de gaz (50) sont formés ou disposés sur l'outil mélangeur le plus bas, proche à la surface de fond (3) et/ou sur le disque porteur (29) inférieure.

7. Dispositif selon la revendication 5 ou 6, **caractérisé en ce, que** les moyens d'admission de gaz (50) sont formés ou disposés au côté inférieur de l'outil mélangeur respectif (12, 21) en face de la surface de fond (3) et/ou du disque porteur (9, 29) respectif.

8. Dispositif selon une quelconque des revendications 5 à 7, **caractérisé en ce, qu'**au moins une vis sans fin (17) est prévue pour l'évacuation du matériau du réservoir de réception (1), dont la boîte (16) avec une ouverture d'admission (27) est reliée, par exemple radialement ou tangentiellement, à une ouverture de décharge (15) du réservoir de réception (1), dans lequel l'ouverture de décharge (15) est disposée à la paroi latérale (2) proche à la surface de fond (3) du réservoir de réception (1).

9. Dispositif selon une quelconque des revendications 5 à 8, **caractérisé en ce, que** chaque outil mélangeur (12, 21) est disposé à un disque porteur (9, 29), qui, conduit dans l'espace intérieur du réservoir récepteur (1) par un arbre (4), est entraîné à rotation autour l'axe (8) dudit arbre (4).

10. Dispositif selon une quelconque des revendications 5 à 9, **caractérisé en ce, qu'**au moins deux outils mélangeur (12, 21) disposés l'un sur l'autre sont prévus dans le réservoir de réception (1), de préférence exactement deux outils mélangeur (12, 21) disposés l'un sur l'autre, à savoir des outils mélangeur (21) supérieurs, disposés en particulier à un disque porteur supérieur (9) et des outils mélangeur (12) inférieurs proches au fond ou tout près du fond (3) disposés en particulier à un disque porteur (29) inférieure proche au fond, un espace intérieur supérieur (26) étant formé dans le réservoir de réception (1) au-dessus des outils mélangeurs supérieur (21) ainsi qu'un espace intérieur inférieur (10), qui est au-dessous des outils mélangeurs supérieurs (21) dans le même réservoir de réception (1), et dans lequel les outils mélangeurs proches au fond (12) et l'ouverture de décharge (15) sont disposés, et dans lequel l'espace intérieur supérieur (26) est en communication avec l'espace intérieur inférieur (10) du réservoir de réception (1), en particulier à travers une fente annulaire libre (11) existante entre la circonférence extérieure du disque porteur supérieur (9) et la paroi latérale (2) du réservoir de réception (1), dans lequel pendant la rotation des outils mélangeurs supérieurs (21) une portion du matériau présent dans l'espace intérieur supérieur (26) arrive à l'espace intérieur inférieur (10), particulièrement à travers la fente annulaire (11), et est transportée de là dans l'ouverture de décharge (15) par les outils mélangeurs (12) inférieurs proches au fond.

11. Dispositif selon une quelconque des revendications 5 à 10, **caractérisé en ce, que** le disque porteur supérieur (9) comprend au moins un ajour (36), qui pénètre le disque porteur (9) et est disposé de préférence près de l'axe (8) et en particulier proche au bords (37) des outils mélangeurs (21), qui courent après pendant la rotation du disque porteur (9), et qui relie l'espace intérieur supérieur (26) avec l'espace intérieur inférieur (10).

12. Dispositif selon une quelconque des revendications 5 à 11, **caractérisé en ce, que** les moyens d'admission de gaz (50) sont disposés proche à l'axe (8), et en particulier proche au bords (37) des outils mélangeurs (21), qui courent après pendant la rotation du disque porteur (9) ou proche à l'ajour (36).

13. Dispositif selon une quelconque des revendications 5 à 12, **caractérisé en ce, que** les moyens d'admission de gaz (50) sont formés comme des moyens d'admission de gaz (50) passives, par exemple comme des ouvertures de passage, à travers desquels le gaz peut être aspiré d'une manière passive à l'intérieur du réservoir de réception (1), par exemple par une dépression dans le réservoir de réception (1), ou que les moyens d'admission de gaz (50) sont formés comme des moyens d'admission de gaz (50) actives, par exemple comme des buses chargées par des dispositifs à pompe ou à souffleur, par lesquels le gaz peut être activement soufflé, injecté ou pompé à l'intérieur du réservoir de réception (1)
et/ou
que les moyens d'évacuation de gaz (51) sont formés comme des moyens d'évacuation de gaz (51) passives, par exemple comme des ouvertures de passage, à travers desquels le gaz peut être évacué passivement du réservoir de réception (1), par exemple par une surpression dans le réservoir de réception (1), ou que les moyens d'évacuation de gaz (51) sont formés comme des moyens d'évacuation de gaz (51) actives, par exemple pressurisés par des dispositifs d'aspiration (53), par lesquels le gaz peut être activement aspiré ou pompé du réservoir de réception (1)
et/ou
qu'un dispositif de chauffage (54) est prévu en amont des moyens d'admission de gaz (50), par lequel le gaz à être introduit à l'intérieur du réservoir de réception (1) peur être chauffé et/ou qu'un dispositif de séchage de gaz (55) est prévu en amont des moyens d'admission de gaz (50), par lequel le gaz à être introduit à l'intérieur du réservoir de réception (1) est séché
et/ou
que les moyens d'admission de gaz (50) pour la régulation d'admission de gaz et/ou les moyens d'évacuation de gaz (51) pour la régulation d'évacuation de gaz peuvent être fermés ou commandés au moins partiellement
et/ou
que les moyens d'admission de gaz (50) sont formés comme des ouvertures individuelles singulières ayant un diamètre entre 10 et 300 mm, de préférence entre 50 et 90 mm et/ou
que les moyens d'admission de gaz (50) aboutissent nettement avec la paroi intérieur de l'outil mélangeur (12, 21), et en particulier ne font saillie du côté intérieur de l'outil mélangeur (12, 21) vers l'intérieur du réservoir (1).

14. Dispositif selon une quelconque des revendications 5 à 13, **caractérisé en ce, qu'**au moins un, préférablement plusieurs, aile(s) à convoyer (65) est/sont formées au côté inférieur en face de la surface de fond (3) d'un disque porteur le plus bas (29) et, le cas échéant aux côtés inférieurs des autres disques porteurs éventuels (9), qui font saillie à partir du disque porteur (29) et, en particulier sont formés radialement et, le cas échéant, d'une manière courbée, qui causent un courant de matériau et de gaz de la zone au-dessous du disque porteur le plus bas (29) vers le haut, particulièrement à travers la fente annulaire (11) et/ou à travers les ajours (36) à la zone au-dessus du disque porteur le plus bas (29).

15. Dispositif selon une quelconque des revendications 5 à 14, **caractérisé en ce, que** les moyens d'évacuation de gaz (51) sont disposés dans une zone loin de la surface de fond (3) du réservoir de réception (1) ou du matériau ou du vortex mélangeur, particulièrement au couvercle du réservoir de réception (1)
et/ou
qu'au moins un dispositif de mesure (56) chargé du gaz déchargé et particulièrement en aval des moyens d'évacuation de gaz (51) pour mesurer la température et/ou, le cas échéant, l'humidité ou la teneur des substances perturbantes dans le gaz sortant des moyens d'évacuation de gaz (51) et du réservoir de réception (1)
et/ou
qu'un dispositif de commande (58) est prévu, qui, en cas de la présence des dispositifs suivants, est relié au dispositif de chauffage (54) et/ou au dispositif de séchage de gaz (55) et/ou au dispositif à pompe ou à souffleur (52) et/ou au dispositif d'aspiration (53) et commande ou règle ceux-ci, le cas échéant, en dépendance des paramètres prédéterminés de matériau et/ou de la température du gaz sortant et/ou de la nature des substances perturbantes.
